(19) Europäisches Patentamt
European Patent Office
Office européen des brevets

(11) **EP 4 726 996 A1**

(12) **EUROPEAN PATENT APPLICATION**
published in accordance with Art. 153(4) EPC

(43) Date of publication:
**15.04.2026 Bulletin 2026/16**

(21) Application number: **23940626.7**

(22) Date of filing: **06.06.2023**

(51) International Patent Classification (IPC):
**H02M 7/49** *(2007.01)*

(52) Cooperative Patent Classification (CPC):
**H02M 7/49**

(86) International application number:
**PCT/JP2023/021008**

(87) International publication number:
**WO 2024/252521 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **OGUSA, Shinichi**
**Tokyo 100-8310 (JP)**
• **NAKAYAMA, Akito**
**Tokyo 100-8310 (JP)**
• **OISHI, Masayuki**
**Tokyo 100-8310 (JP)**
• **KONO, Yoshiyuki**
**Tokyo 100-8310 (JP)**

(74) Representative: **Witte, Weller & Partner**
**Patentanwälte mbB**
**Postfach 10 54 62**
**70047 Stuttgart (DE)**

(54) **POWER CONVERSION DEVICE**

(57) A power conversion device includes a power converter (6) and a control device (5). The control device (5) includes a first circulating current command generation unit (417) to generate a first circulating current command value for controlling balance of voltages of energy storage elements (32) between arms (13pu to 13nw), a second circulating current command generation unit (419) to generate a second circulating current command value having a frequency component that is an even multiple of a fundamental wave frequency of an AC system (2), and a circulating current control unit (421) to generate a circulating voltage command value such that a circulating current circulating in the power converter (6) follows a circulating current command value that is based on the first circulating current command value and the second circulating current command value. The second circulating current command generation unit (419) calculates a first control margin that is based on one or more representative values of the voltages of the energy storage elements (32) and one or more representative command values respectively corresponding to the one or more representative values, and controls an amplitude of the second circulating current command value based on at least one first control margin.

FIG.6

**Description**

TECHNICAL FIELD

The present disclosure relates to a power conversion device.

BACKGROUND ART

In recent years, a modular multilevel converter (MMC) has been known as a high-voltage and large-capacity power conversion device applied to a high-voltage system such as a power system. The MMC is constituted by arms including a plurality of cascade-connected unit converters called cells. Each cell includes a plurality of semiconductor switches and a capacitor, and outputs a voltage across the capacitor or a zero voltage by turning on/off the semiconductor switches.

The capacitor is one of factors that increase the size of the unit converter, and is required to be downsized. As a means for downsizing the capacitor, it is conceivable to decrease a capacitance, but a decrease in capacitance causes an increase in pulsation of a voltage applied to the capacitor. When voltage pulsation in the capacitor increases, there is a possibility that the voltage may exceed a rated voltage of the capacitor, and thereby a failure occurs or a desired voltage cannot be outputted. In order to suppress the voltage pulsation, there is known a technique of causing a circulating current including a frequency that is an even multiple of that of an alternating current (AC) system to flow in a power converter.

For example, a power conversion device according to Japanese Patent No. 7038936 (PTL 1) has a first control mode for controlling a circulating current circulating between leg circuits for each phase in a power converter such that the circulating current includes an AC component having a frequency that is an even multiple of an AC fundamental wave frequency excluding a multiple of 3, and determines whether the first control mode is valid or invalid based on a voltage value of an energy storage element.

CITATION LIST

PATENT LITERATURE

PTL 1: Japanese Patent No. 7038936

SUMMARY OF INVENTION

TECHNICAL PROBLEM

The power conversion device according to PTL 1 performs the first control mode for controlling the circulating current when the voltage value of the energy storage element exceeds a set threshold value range. However, the circulating current has a constant amplitude in an operation range in which the circulating current needs to flow. Accordingly, there is a possibility that the circulating current may flow more than needed, which may cause an increase in power loss of the power conversion device.

An object in an aspect of the present disclosure is to provide a power conversion device capable of suppressing an increase in power loss as much as possible while reducing voltage pulsation in a capacitor of a unit converter.

SOLUTION TO PROBLEM

According to an embodiment, a power conversion device connected to an AC system is provided. The power conversion device includes a power converter including a plurality of arms for each phase of the AC system, and a control device to control the power converter. Each of the plurality of arms has a plurality of converter cells cascade-connected to each other. Each of the plurality of converter cells has a plurality of switching elements and an energy storage element connected to the plurality of switching elements. The control device includes a first circulating current command generation unit to generate a first circulating current command value for controlling balance of voltages of the energy storage elements between the arms, a second circulating current command generation unit to generate a second circulating current command value having a frequency component that is an even multiple of a fundamental wave frequency of the AC system, and a circulating current control unit to generate a circulating voltage command value such that a circulating current circulating in the power converter follows a circulating current command value that is based on the first circulating current command value and the second circulating current command value. The second circulating current command generation unit calculates a first control margin that is based on one or more representative values of the voltages of the energy storage elements and one or more representative command values respectively corresponding to the one or more representative values, and controls an amplitude of the second circulating current command value based on at least one first control margin.

ADVANTAGEOUS EFFECTS OF INVENTION

With the power conversion device according to the present disclosure, it is possible to suppress an increase in power loss as much as possible while reducing voltage pulsation in a capacitor of a unit converter.

BRIEF DESCRIPTION OF DRAWINGS

Fig. 1 is a diagram showing an exemplary configuration of a power conversion device.
Fig. 2 is a circuit diagram showing an example of a converter cell.
Fig. 3 is a block diagram showing an example of a hardware configuration of a control device.
Fig. 4 is a diagram showing an internal configuration of a control device according to a first embodiment.
Fig. 5 is a diagram showing a part of a functional configuration of a basic control unit according to the first embodiment.
Fig. 6 is a diagram showing another part of the functional configuration of the basic control unit according to the first embodiment.
Fig. 7 is a diagram showing an example of a functional configuration of a second circulating current command generation unit according to the first embodiment.
Fig. 8 is a diagram showing a specific exemplary configuration of an amplitude control unit according to the first embodiment.
Fig. 9 is a diagram for illustrating an example of a function of a filter unit.
Fig. 10 is a diagram for illustrating another example of the function of the filter unit.
Fig. 11 is a diagram showing a functional configuration of a part of a basic control unit according to a second embodiment.
Fig. 12 is a diagram showing a functional configuration of a zero-phase voltage command generation unit according to the second embodiment.
Fig. 13 is a diagram showing a functional configuration of a phase control unit according to the second embodiment.
Fig. 14 is a diagram showing upper-side control margins and lower-side control margins monitored in each section.
Fig. 15 is a diagram of various waveforms in each section before adjustment of a phase of a zero-phase voltage command value.
Fig. 16 is an example of a diagram of various waveforms in each section after the adjustment of the phase of the zero-phase voltage command value.
Fig. 17 is another example of the diagram of various waveforms in each section after the adjustment of the phase of the zero-phase voltage command value.
Fig. 18 is a diagram showing an example of a functional configuration of a second circulating current command generation unit according to the second embodiment.
Fig. 19 is a diagram showing a specific exemplary configuration of an amplitude control unit according to the second embodiment.
Fig. 20 is a diagram showing a functional configuration of a phase control unit according to a modification of the second embodiment.

DESCRIPTION OF EMBODIMENTS

Hereinafter, the present embodiment will be described with reference to the drawings. In the description below, identical parts will be designated by the same reference numerals. Since their names and functions are also the same, detailed description thereof will not be repeated.

[Configuration as Basis of Each Embodiment]

<Overall Configuration>

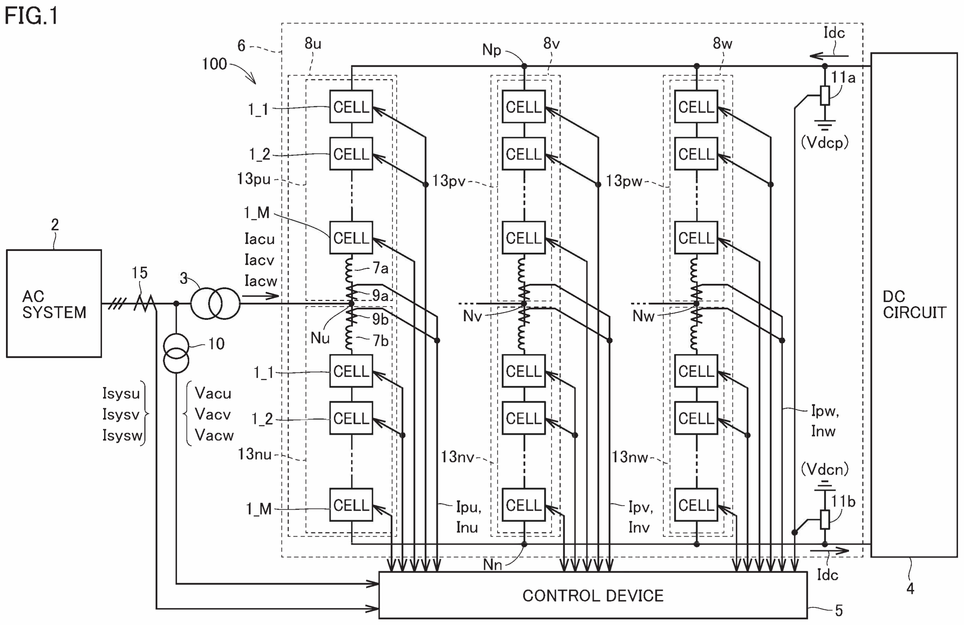

Fig. 1 is a diagram showing an exemplary configuration of a power conversion device 100. Referring to Fig. 1, power conversion device 100 is connected between an AC system 2 and a direct current (DC) circuit 4. DC circuit 4 includes a power storage element connected to a DC terminal of a power converter 6. The power storage element is a power storage device including an electric double layer capacitor or a storage battery such as a lithium ion battery, for example. Alternatively, DC circuit 4 includes a DC terminal of another power converter connected to the DC terminal of power converter 6. In this case, the two power converters are coupled to constitute a Back To Back (BTB) system for connecting AC power systems having different rated frequencies or the like.

Power conversion device 100 includes self-commutated power converter 6, and a control device 5 to control power converter 6. Typically, power converter 6 is constituted by a modular multilevel converter including a plurality of converter cells (corresponding to "cells" in Fig. 1) 1 connected in series with each other. A "converter cell" is also referred to as a "sub module" or a "unit converter".

Power converter 6 is a power converter that is connected to DC circuit 4 and performs power conversion between DC circuit 4 and AC system 2. Specifically, power converter 6 converts DC power outputted from DC circuit 4 into AC power, and outputs the AC power to AC system 2 via a voltage transformer 3. Further, power converter 6 converts AC power from AC system 2 into DC power, and outputs the DC power to DC circuit 4.

In the example in Fig. 1, power converter 6 includes a plurality of arms for each phase of AC system 2. Specifically, power converter 6 includes a plurality of leg circuits 8u, 8v, and 8w (hereinafter described as a "leg circuit 8" when they are collectively referred to or any one of them is referred to) connected in parallel with each other between a positive electrode DC terminal (that is, a high potential-side DC terminal) Np and a negative electrode DC terminal (that is, a low potential-side DC terminal) Nn.

Leg circuit 8 is provided for each of a plurality of phases constituting an alternating current. Leg circuit 8 is connected between AC system 2 and DC circuit 4, and performs power conversion between both circuits. Fig. 1 shows a case where AC system 2 is a three-phase AC system, and three leg circuits 8u, 8v, and 8w are provided corresponding to a U phase, a V phase, and a W phase, respectively.

AC terminals Nu, Nv, and Nw provided to leg circuits 8u, 8v, and 8w, respectively, are connected to AC system 2 via voltage transformer 3. AC system 2 is, for example, a three-phase AC power system including an AC power source and the like. In Fig. 1, for ease of illustration, connection between AC terminal Nv, Nw and voltage transformer 3 is not shown. The DC terminals (that is, positive electrode DC terminal Np and negative electrode DC terminal Nn) provided in common to leg circuits 8 are connected to DC circuit 4.

Leg circuits 8u, 8v, and 8w may be configured to be connected to AC system 2 via an interconnection reactor, instead of using voltage transformer 3 in Fig. 1. Furthermore, leg circuits 8u, 8v, and 8w may be respectively provided with primary windings instead of AC terminals Nu, Nv, and Nw, and leg circuits 8u, 8v, and 8w may be AC-connected to voltage transformer 3 or the interconnection reactor via secondary windings magnetically coupled to the primary windings. In this case, the primary windings may be reactors 7a and 7b described below. That is, leg circuits 8 are electrically (that is, DC- or AC-) connected to AC system 2 via connection portions provided to leg circuits 8u, 8v, and 8w, such as AC terminals Nu, Nv, and Nw or the primary windings described above.

Leg circuit 8u includes a positive-side arm 13pu extending from positive electrode DC terminal Np to AC terminal Nu, and a negative-side arm 13nu extending from negative electrode DC terminal Nn to AC terminal Nu. A connection point between positive-side arm 13pu and negative-side arm 13nu is connected, as AC terminal Nu, with voltage transformer 3. Positive electrode DC terminal Np and negative electrode DC terminal Nn are connected to DC circuit 4. Leg circuit 8v includes a positive-side arm 13pv and a negative-side arm 13nv, and leg circuit 8w includes a positive-side arm 13pw and a negative-side arm 13nw.

Hereinafter, positive-side arms 13pu, 13pv, and 13pw are described as a "positive-side arm 13p" when they are collectively referred to or any one of them is referred to. Negative-side arms 13nu, 13nv, and 13nw are described as a "negative-side arm 13n" when they are collectively referred to or any one of them is referred to. Positive-side arms 13pu, 13pv, and 13pw and negative-side arms 13nu, 13nv, and 13nw are described as an "arm 13" when they are collectively referred to or any one of them is referred to.

Since leg circuits 8v and 8w have the same configuration as that of leg circuit 8u, leg circuit 8u will be described below as a representative. In leg circuit 8u, positive-side arm 13pu includes a plurality of converter cells 1_1 to 1_M cascade-connected to each other, and reactor 7a. The plurality of converter cells 1 and reactor 7a are connected in series with each other. Negative-side arm 13nu includes a plurality of converter cells 1_1 to 1_M cascade-connected to each other, and reactor 7b. The plurality of converter cells 1 and reactor 7b are connected in series with each other.

In the present embodiment, for example, the number of converter cells included in each arm 13 is indicated by M, where $M \geq 2$. Further, converter cells 1_1 to 1_M may be collectively referred to as converter cells 1. A value and a variable after an underbar in each of converter cells 1_1 to 1_M indicate an index of converter cell 1. Any converter cell 1 may be indicated as a "converter cell 1_i" using an index i. However, index i is not related to the physical disposition of converter cell 1.

Reactor 7a may be inserted at any position in positive-side arm 13pu, and reactor 7b may be inserted at any position in negative-side arm 13nu. A plurality of reactors 7a and a plurality of reactors 7b may be provided. The reactors may have inductance values different from each other. Furthermore, only reactor 7a in positive-side arm 13pu or only reactor 7b in negative-side arm 13nu may be provided.

Power conversion device 100 further includes an AC voltage detector 10, an AC current detector 15, DC voltage detectors 11a and 11b, and arm current detectors 9a and 9b provided to each leg circuit 8. These detectors each measure an electrical quantity (that is, a current or a voltage) used to control power conversion device 100. Signals detected by these detectors are inputted to control device 5.

AC voltage detector 10 detects a U-phase AC voltage Vacu, a V-phase AC voltage Vacv, and a W-phase AC voltage Vacw (hereinafter also collectively referred to as an "AC voltage Vac") of AC system 2. AC current detector 15 detects a U-phase AC current measured value Isysu, a V-phase AC current measured value Isysv, and a W-phase AC current measured value Isysw of AC system 2. DC voltage detector 11a detects a DC voltage Vdcp of positive electrode DC terminal Np connected to DC circuit 4. DC voltage detector 11b detects a DC voltage Vdcn of negative electrode DC terminal Nn connected to DC circuit 4.

Arm current detectors 9a and 9b provided to leg circuit 8u for the U phase detect a positive-side arm current Ipu flowing to positive-side arm 13pu and a negative-side arm current Inu flowing to negative-side arm 13nu, respectively. Arm current detectors 9a and 9b provided to leg circuit 8v for the V phase detect a positive-side arm current Ipv and a negative-side arm current Inv, respectively. Arm current detectors 9a and 9b provided to leg circuit 8w for the W phase detect a positive-side arm current Ipw and a negative-side arm current Inw, respectively.

In the following description, positive-side arm currents Ipu, Ipv, and Ipw are collectively described as a positive-side arm current Iarmp. Negative-side arm currents Inu, Inv, and Inw are collectively described as a negative-side arm current Iarmn. Positive-side arm current Iarmp and negative-side arm current Iarmn are collectively described as an arm current Iarm.

As shown in Fig. 1, AC terminal Nu, which is the connection point between positive-side arm 13pu and negative-side arm 13nu of leg circuit 8u, is connected to voltage transformer 3. Therefore, an AC current Iacu flowing from AC terminal Nu toward voltage transformer 3 has a current value obtained by subtracting negative-side arm current Inu from positive-side arm current Ipu. The same applies to AC currents Iacv and Iacw. Accordingly, the following equations (1) to (3) are established.

$$Iacu = Ipu-Inu\dots(1)$$

$$Iacv = Ipv-Inv\dots(2)$$

$$Iacw = Ipw-Inw\dots(3)$$

When it is assumed that an average value of positive-side arm current Ipu and negative-side arm current Inu is a common current flowing to positive-side arm 13pu and negative-side arm 13nu, this current is a leg current Icomu (= (Ipu+Inu)/2) flowing through DC terminals of leg circuit 8u. Regarding this current, the same applies to leg currents Icomv and Icomw of leg circuits 8v and 8w.

Positive electrode DC terminals of leg circuits 8u, 8v, and 8w for the respective phases are connected in common as positive electrode DC terminal Np, and negative electrode DC terminals thereof are connected in common as negative electrode DC terminal Nn. With this configuration, a current value obtained by adding leg currents Icomu, Icomv, and Icomw for the respective phases indicates a DC current Idc that flows in from a positive-side terminal of DC circuit 4 and returns to DC circuit 4 via a negative-side terminal. Therefore, DC current Idc is expressed as in an equation (4).

$$Idc = (Ipu+Ipv+Ipw+Inu+Inv+Inw)/2\dots(4)$$

When a DC current component included in a leg current is equally shared for each phase, the cells can have an equal current capacity. In consideration of this, a difference between the leg current and one-third of a DC current value can be computed as a current value of a circulating current that does not flow to DC circuit 4 but flows between legs for each phase. Accordingly, circulating currents Izu, Izv, and Izw for the U phase, the V phase, and the W phase are expressed by the following equations (5), (6), and (7), respectively.

$$Izu = (Ipu+Inu)/2-Idc/3\dots(5)$$

$$Izv = (Ipv+Inv)/2-Idc/3\dots(6)$$

$$Izw = (Ipw+Inw)/2 - Idc/3 \ldots (7)$$

<Exemplary Configuration of Converter Cell>

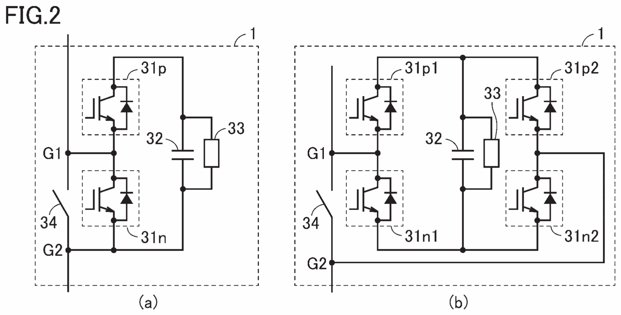

Fig. 2 is a circuit diagram showing an example of converter cell 1. Converter cell 1 shown in Fig. 2(a) has a circuit configuration called a half-bridge configuration. This converter cell 1 includes a series body formed by connecting two switching elements 31p and 31n in series, a capacitor 32 as a power storage element, a voltage detector 33, and a bypass switch 34. The series body and capacitor 32 are connected in parallel. Voltage detector 33 detects a capacitor voltage Vc, which is a voltage across capacitor 32.

Converter cell 1 shown in Fig. 2(b) has a circuit configuration called a full-bridge configuration. This converter cell 1 includes a first series body formed by connecting two switching elements 31p1 and 31n1 in series, a second series body formed by connecting two switching elements 31p2 and 31n2 in series, capacitor 32, voltage detector 33, and bypass switch 34. The first series body, the second series body, and capacitor 32 are connected in parallel. Voltage detector 33 detects voltage Vc. Capacitor voltage Vc is inputted to control device 5.

Two switching elements 31p and 31n in Fig. 2(a) and four switching elements 31p1, 31n1, 31p2, and 31n2 in Fig. 2(b) are each constituted, for example, by connecting a freewheeling diode in anti-parallel with a self-turn-off semiconductor switching element such as an insulated gate bipolar transistor (IGBT), a metal oxide semiconductor field-effect transistor (MOSFET), or a gate commutated turn-off (GCT) thyristor. Further, in Fig. 2(a) and Fig. 2(b), a film capacitor or the like is mainly used as capacitor 32.

Hereinafter, a voltage of a capacitor 32_i included in an i-th converter cell 1_i in positive-side arm 13pu for the U phase is described as Vcpu_i. A voltage of a capacitor 32_i included in an i-th converter cell 1_i in negative-side arm 13nu for the U phase is described as Vcnu_i. The same applies to the V phase and the W phase. The capacitor voltages are also collectively referred to as Vc, and any capacitor voltage is also referred to as Vc_i.

In the following description, switching elements 31p, 31n, 31p1, 31n1, 31p2, and 31n2 are also collectively referred to as a switching element 31. Further, on/off of the semiconductor switching element within switching element 31 is simply referred to as "on/off of switching element 31".

Referring to Fig. 2(a), both terminals of switching element 31n are referred to as input/output terminals G1 and G2. By a switching operation of switching elements 31p and 31n, the voltage across capacitor 32 and a zero voltage are outputted. For example, when switching element 31p is turned on and switching element 31n is turned off, the voltage across capacitor 32 is outputted. When switching element 31p is turned off and switching element 31n is turned on, the zero voltage is outputted.

Bypass switch 34 is connected between input/output terminals G1 and G2. In Fig. 2(a), bypass switch 34 is connected in parallel with switching element 31n. By turning on bypass switch 34, converter cell 1 is short-circuited. For example, bypass switch 34 is utilized to short-circuit converter cell 1 when each element of converter cell 1 fails. Thereby, even if any converter cell 1 fails, operation of power converter 6 can be continued by utilizing other converter cells 1.

Next, referring to Fig. 2(b), a midpoint between switching element 31p1 and switching element 31n1 and a midpoint between switching element 31p2 and switching element 31n2 are respectively referred to as input/output terminals G1 and G2 of converter cell 1. Converter cell 1 shown in Fig. 2(b) outputs a positive voltage or a zero voltage by turning on switching element 31n2, turning off switching element 31p2, and alternately turning on switching elements 31p1 and 31n1. Further, converter cell 1 shown in Fig. 2(b) can output the zero voltage or a negative voltage by turning off switching element 31n2, turning on switching element 31p2, and alternately turning on switching elements 31p1 and 31n1.

Bypass switch 34 is connected between input/output terminals G1 and G2. It should be noted that bypass switch 34 is connected in parallel with a series body of switching elements 31n1 and 31n2. By turning on bypass switch 34, converter cell 1 is short-circuited.

In the present embodiment, converter cell 1 may have the configuration of a half-bridge cell shown in Fig. 2(a), or the full-bridge configuration shown in Fig. 2(b). Further, a converter cell having a configuration other than those described above may be used, for example, a converter cell having a circuit configuration called a clamped double cell or the like applied thereto, and the switching element and an energy storage element are also not limited to those described above.

<Exemplary Hardware Configuration of Control Device>

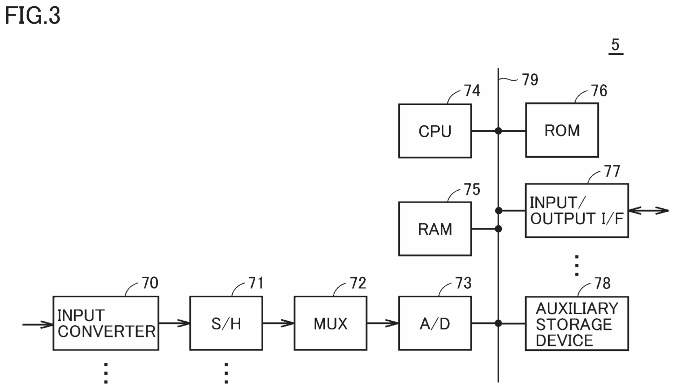

Fig. 3 is a block diagram showing an example of a hardware configuration of control device 5. Control device 5 in the case of Fig. 3 is constituted based on a computer. Referring to Fig. 3, control device 5 includes one or more input converters 70, one or more sample hold (S/H) circuits 71, a multiplexer (MUX) 72, and an A/D converter 73. Furthermore, control device 5 includes one or more central processing unit (CPU) 74, a random access memory (RAM) 75, and a read only memory (ROM) 76. Furthermore, control device 5 includes one or more input/output interfaces 77, an auxiliary storage device 78, and a bus 79 that mutually connects the components described above.

Input converter 70 includes an auxiliary transformer for each input channel. Each auxiliary transformer converts a detection signal detected by each electrical quantity detector in Fig. 1 into a signal having a voltage level suitable for subsequent signal processing.

Sample hold circuit 71 is provided for each input converter 70. Sample hold circuit 71 samples a signal indicating an electrical quantity received from corresponding input converter 70 using a specified sampling frequency, and holds the signal.

Multiplexer 72 sequentially selects the signals held in a plurality of sample hold circuits 71. A/D converter 73 converts a signal selected by multiplexer 72 into a digital value. It should be noted that A/D conversion may be performed in parallel on detection signals of a plurality of input channels, by providing a plurality of A/D converters 73.

CPU 74 controls entire control device 5, and performs computation processing according to a program. RAM 75 as a volatile memory and ROM 76 as a nonvolatile memory are used as main storages for CPU 74. ROM 76 stores programs, set values for signal processing, and the like. Auxiliary storage device 78 is a nonvolatile memory having a capacity larger than that of ROM 76, and stores programs, data of electrical quantity detection values, and the like.

Input/output interface 77 is an interface circuit in communicating between CPU 74 and an external device.

It should be noted that at least a part of control device 5 may be constituted using a circuit such as a field programmable gate array (FPGA) and an application specific integrated circuit (ASIC). Alternatively, at least a part of control device 5 can also be constituted by an analog circuit.

Hereinafter, each embodiment will be specifically described.

First Embodiment.

<Functional Configuration of Control Device>

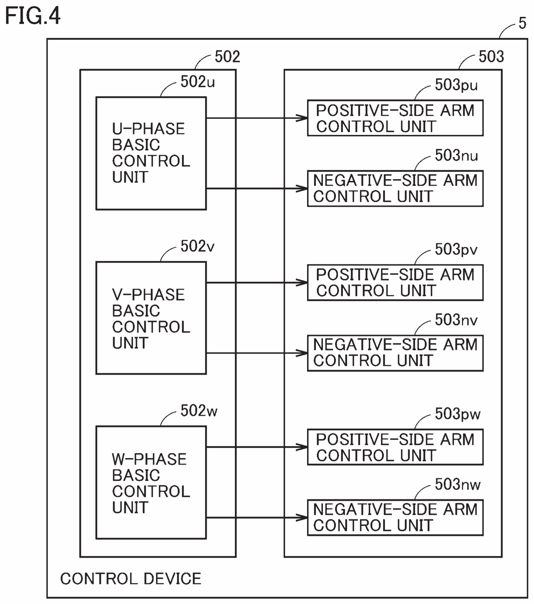

Fig. 4 is a diagram showing an internal configuration of control device 5 according to a first embodiment. Referring to Fig. 4, control device 5 includes a basic control unit 502 and an arm control unit 503. Basic control unit 502 includes a U-phase basic control unit 502u, a V-phase basic control unit 502v, and a W-phase basic control unit 502w. Arm control unit 503 includes a positive-side arm control unit 503pu and a negative-side arm control unit 503nu for the U phase, a positive-side arm control unit 503pv and a negative-side arm control unit 503nv for the V phase, and a positive-side arm control unit 503pw and a negative-side arm control unit 503nw for the W phase.

Configurations of basic control unit 502 and arm control unit 503 are each implemented by processing circuitry, for example. The processing circuitry may be dedicated hardware, or may be CPU 74 that executes a program stored in an internal memory of control device 5. When the processing circuitry is dedicated hardware, the processing circuitry is constituted by an FPGA, an ASIC, a combination thereof, or the like, for example.

Basic control unit 502 generates two arm voltage command values Varmp* and Varmn* for positive-side arm 13p and negative-side arm 13n for each phase, a capacitor voltage command value Vcp* for positive-side arm 13p for each phase, and a capacitor voltage command value Vcn* for negative-side arm 13n for each phase, using the electrical quantities measured by the detectors described above. In the following description, when which arm of the arms for each phase is not specified, the arm voltage command values and the capacitor voltage command values are simply described as an arm voltage command value Varm* and a capacitor voltage command value Vc*, respectively. Furthermore, basic control unit 502 generates, for each arm voltage command value Varm*, a modulation signal Karm* for causing each of the plurality of converter cells 1 in each arm 13 to output a voltage.

Based on each modulation signal Karm* and capacitor voltage command value Vc*, arm control unit 503 generates a gate control signal GP for controlling on and off of switching elements 31p and 31n provided in each converter cell 1 constituting the arm, and outputs gate control signal GP to each converter cell 1.

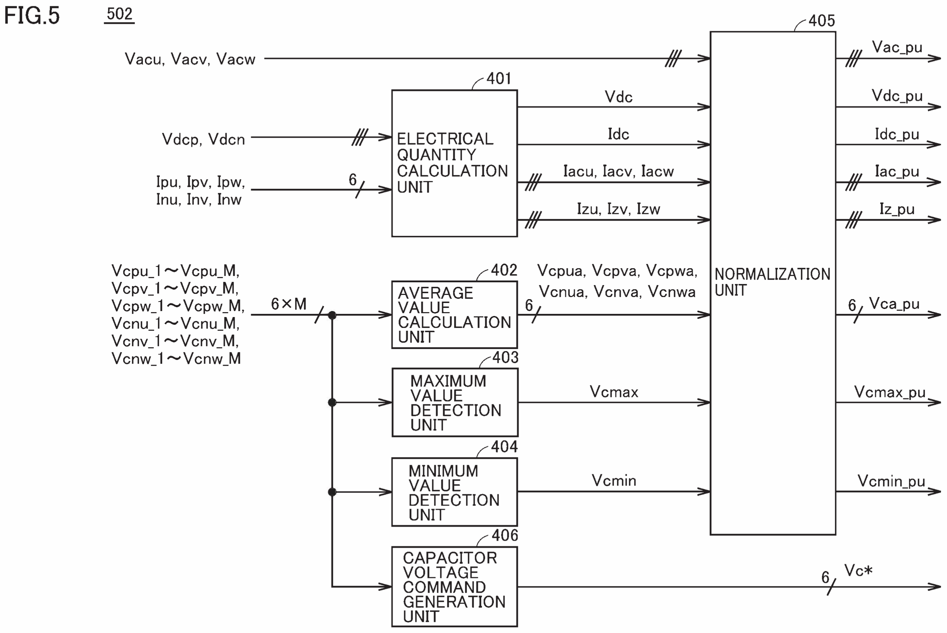

Fig. 5 is a diagram showing a part of a functional configuration of basic control unit 502 according to the first embodiment. Referring to Fig. 5, basic control unit 502 includes an electrical quantity calculation unit 401, an average value calculation unit 402, a maximum value detection unit 403, a minimum value detection unit 404, a normalization unit 405, and a capacitor voltage command generation unit 406.

Electrical quantity calculation unit 401 receives inputs of DC voltages Vdcp and Vdcn, positive-side arm currents Ipu, Ipv, and Ipw, and negative-side arm currents Inu, Inv, and Inw. Electrical quantity calculation unit 401 calculates a difference between DC voltage Vdcp and DC voltage Vdcn (that is, Vdcp-Vdcn) as a DC voltage Vdc. Electrical quantity calculation unit 401 calculates AC currents Iacu, Iacv, and Iacw, using the equations (1) to (3) described above. Electrical quantity calculation unit 401 calculates DC current Idc, using the equation (4) described above. Electrical quantity calculation unit 401 calculates circulating currents Izu, Izv, and Izw, using the equations (5) to (7) described above.

Average value calculation unit 402 calculates an average value of capacitor voltages Vc for each arm, based on capacitor voltages Vc of all converter cells 1 (for example, "6×M" converter cells 1) included in power converter 6.

Specifically, average value calculation unit 402 calculates, for the U phase, a total voltage value VcpuS (for example, "Vcpu_1+...+Vcpu_M") of capacitor voltages Vc of converter cells 1 included in positive-side arm 13pu, and calculates a capacitor voltage average value Vcpua (for example, VcpuS/M) in positive-side arm 13pu. Further, average value calculation unit 402 calculates a total voltage value VcnuS (for example, "Vcnu_1+...+Vcnu_M") of capacitor voltages Vc of converter cells 1 included in negative-side arm 13nu, and calculates a capacitor voltage average value Vcnua (for example, VenuS/M) in negative-side arm 13nu.

Similarly, average value calculation unit 402 calculates, for the V phase, a capacitor voltage average value Vcpva in positive-side arm 13pv and a capacitor voltage average value Vcnva in negative-side arm 13nv. Average value calculation unit 402 calculates, for the W phase, a capacitor voltage average value Vcpwa in positive-side arm 13pw and a capacitor voltage average value Vcnwa in negative-side arm 13nw.

It should be noted that average value calculation unit 402 may calculate each capacitor voltage average value from active power or reactive power outputted from power converter 6, or the like, instead of from actually detected capacitor voltages Vc.

Maximum value detection unit 403 detects a maximum value of capacitor voltages Vc of all converter cells 1 included in power converter 6, as a capacitor voltage maximum value Vcmax. Minimum value detection unit 404 detects a minimum value of capacitor voltages Vc of all converter cells 1 included in power converter 6, as a capacitor voltage minimum value Vcmin.

It should be noted that "all converter cells 1 included in power converter 6" do not include a failed converter cell 1. For example, the "failed converter cell 1" is converter cell 1 in which bypass switch 34 is turned on.

Normalization unit 405 outputs a value obtained by normalizing each inputted calculation value and detection value using a corresponding reference value (for example, a rated value). Specifically, normalization unit 405 outputs values obtained by dividing AC voltages Vacu, Vacv, and Vacw by a rated value, as normalized AC voltages Vacu_pu, Vacv_pu, and Vacw_pu (hereinafter also collectively referred to as an "AC voltage Vac_pu").

Normalization unit 405 outputs a value obtained by dividing DC voltage Vdc by a rated value, as a normalized DC voltage Vdc_pu. Normalization unit 405 outputs values obtained by dividing AC currents Iacu, Iacv, and Iacw by a rated value, as normalized AC currents Iacu_pu, Iacv_pu, and Iacw_pu (hereinafter also collectively referred to as an "AC current Iac_pu"). Normalization unit 405 outputs values obtained by dividing circulating currents Izu, Izv, and Izw by a rated value, as normalized circulating currents Izu_pu, Izv_pu, and Izw_pu (hereinafter also collectively referred to as a "circulating current Iz_pu").

Normalization unit 405 outputs values obtained by dividing capacitor voltage average values Vcpua, Vcpva, Vcpwa, Vcnua, Vcnva, and Vcnwa by a rated value, as normalized capacitor voltage average values Vcpua_pu, Vcpva_pu, Vcpwa_pu, Vcnua_pu, Vcnva_pu, and Vcnwa_pu (hereinafter also collectively referred to as a "capacitor voltage average value Vca_pu"). Normalization unit 405 outputs a value obtained by dividing capacitor voltage maximum value Vcmax by a rated value, as a normalized capacitor voltage maximum value Vcmax_pu. Normalization unit 405 outputs a value obtained by dividing capacitor voltage minimum value Vcmin by a rated value, as a normalized capacitor voltage minimum value Vcmin_pu.

Capacitor voltage command generation unit 406 calculates capacitor voltage command value Vcp* for capacitors 32 of converter cells 1 included in positive-side arm 13p for each phase. Capacitor voltage command generation unit 406 calculates capacitor voltage command value Vcn* for capacitors 32 of converter cells 1 included in negative-side arm 13n for each phase. For example, capacitor voltage command value Vcp* for each phase is an average voltage value of capacitors 32 of converter cells 1 in positive-side arm 13p for each phase. Capacitor voltage command value Vcn* for each phase is an average voltage value of capacitors 32 of converter cells 1 in negative-side arm 13n for each phase.

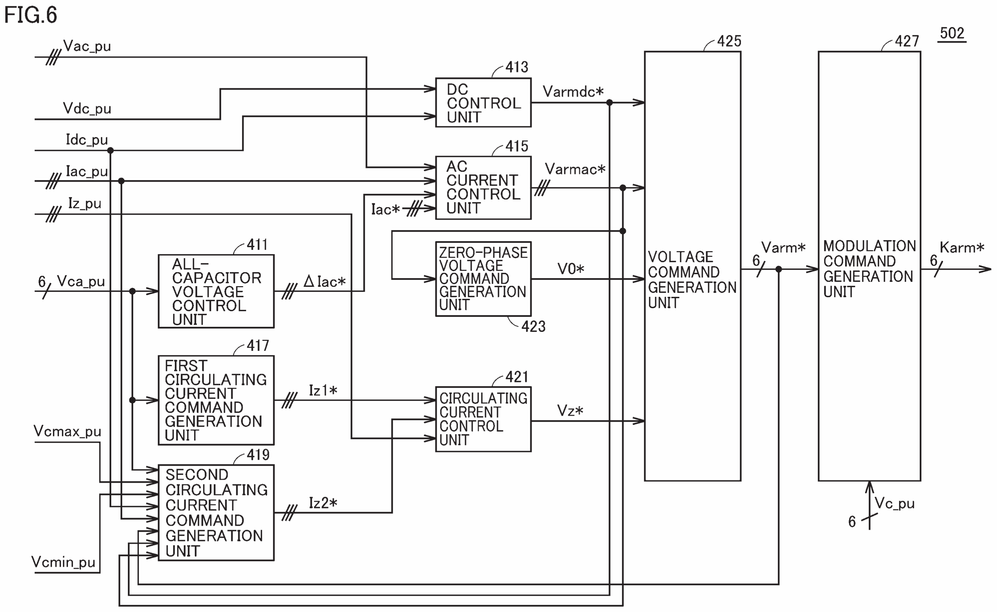

Fig. 6 is a diagram showing another part of the functional configuration of basic control unit 502 according to the first embodiment. Referring to Fig. 6, basic control unit 502 further includes an all-capacitor voltage control unit 411, a DC control unit 413, an AC current control unit 415, a first circulating current command generation unit 417, a second circulating current command generation unit 419, a circulating current control unit 421, a zero-phase voltage command generation unit 423, a voltage command generation unit 425, and a modulation command generation unit 427.

All-capacitor voltage control unit 411 calculates an average value of six capacitor voltage average values Vca_pu (that is, Vcpua_pu to Vcnwa_pu), and generates an AC current correction command value ΔIac* such that the average value follows an all-capacitor voltage command value Vcall* (for example, such that a deviation between the average value and all-capacitor voltage command value Vcall* becomes 0). All-capacitor voltage command value Vcall* is a command value given for a voltage average value of all capacitors included in power converter 6. It should be noted that all-capacitor voltage control unit 411 may generate a correction command value for correcting a DC current command value Idc*, instead of AC current correction command value ΔIac*, or may generate both the correction command value and AC current correction command value ΔIac*.

DC control unit 413 performs DC current control for causing a DC current Idc_pu to follow DC current command value Idc*. Typically, DC control unit 413 generates a DC control command value Varmdc* such that DC current Idc_pu follows DC current command value Idc* (for example, such that a deviation between DC current Idc_pu and DC current command value Idc* becomes 0).

Alternatively, DC control unit 413 may be configured to be based on DC voltage control for causing DC voltage Vdc to follow a DC voltage command value Vdc*, and perform the DC current control when the DC current exceeds a predetermined upper limit value. Typically, DC control unit 413 generates DC control command value Varmdc* such that a deviation between DC voltage command value Vdc* and DC voltage Vdc becomes 0, and when the DC current exceeds the upper limit value, DC control unit 413 performs the DC current control described above. DC current command value Idc* and DC voltage command value Vdc* are set beforehand by a system operator or the like, for example. It should be noted that DC voltage command value Vdc* may be computed based on DC voltage Vdc_pu.

AC current control unit 415 calculates a command value obtained by correcting an AC current command value Iac* for each phase by AC current correction command value ΔIac* for each phase (for example, Iac*+ΔIac*). AC current control unit 415 generates an AC control command value Varmac* for each phase, by feedback control for setting a deviation between the command value and AC current Iac_pu to 0 and feedforward control of AC voltage Vac_pu. It should be noted that AC current control unit 415 may be configured not to perform feedforward control of AC voltage Vac_pu for each phase.

First circulating current command generation unit 417 generates a first circulating current command value Iz1* for controlling balance of the voltages of capacitors 32 between arms 13. Specifically, first circulating current command generation unit 417 generates first circulating current command value Iz1* such that capacitor voltage average values Vcpua_pu to Vcnwa_pu are balanced. For example, first circulating current command generation unit 417 performs inter-phase balance voltage control and inter-positive/negative arm balance voltage control.

For the U phase, first circulating current command generation unit 417 performs feedback control for causing a capacitor voltage average value (for example, an average value of Vcpua_pu and Vcnua_pu) of capacitors 32 included in leg circuit 8u to follow an inter-phase balance voltage command value. The same control is performed for the V phase and the W phase. This control corresponds to the inter-phase balance voltage control for matching a voltage average value of all capacitors included in a phase (for example, the U phase) to the command value.

Further, for the U phase, first circulating current command generation unit 417 performs feedback control for causing capacitor voltage average value Venua_pu of negative-side arm 13n to follow capacitor voltage average value Vcpua_pu of positive-side arm 13p, and thereby controls balance of the voltages of capacitors 32 between the positive and negative arms. First circulating current command generation unit 417 may perform feedback control for causing capacitor voltage average value Vcpua_pu to follow capacitor voltage average value Vcnua_pu. The same control is performed for the V phase and the W phase. This control corresponds to the inter-positive/negative arm balance voltage control for matching a voltage average value of all capacitors included in one arm (for example, a negative-side arm) of a phase (for example, the U phase) to a command value (for example, a capacitor voltage average value of a positive-side arm).

First circulating current command generation unit 417 adds a feedback computation result obtained by the inter-phase balance voltage control and a feedback computation result obtained by the positive/negative balance voltage control, to generate first circulating current command value Iz1*.

Second circulating current command generation unit 419 generates a second circulating current command value Iz2* having a frequency component that is an even multiple of a fundamental wave frequency of AC system 2, based on DC current Idc_pu, AC current Iac_pu, each capacitor voltage average value Vca_pu, capacitor voltage maximum value Vcmax_pu, capacitor voltage minimum value Vcmin_pu, DC control command value Varmdc*, AC control command value Varmac*, and each arm voltage command value Varm*. A detailed configuration of second circulating current command generation unit 419 will be described later.

Circulating current control unit 421 generates a circulating voltage command value Vz* such that circulating current Iz_pu circulating in power converter 6 follows circulating current command value Iz* that is based on first circulating current command value Iz1* and second circulating current command value Iz2* (for example, such that a deviation between circulating current command value Iz* and circulating current Iz_pu becomes 0). Typically, circulating current command value Iz* is an addition value of first circulating current command value Iz1* and second circulating current command value Iz2*.

Zero-phase voltage command generation unit 423 matches zero-crossings of AC control command values Varmac* for the respective phases, and thereafter generates a zero-phase voltage command value V0* having a frequency that is three times AC control command value Varmac*.

Voltage command generation unit 425 generates arm voltage command value Varm*, which is a command value for an output voltage of each arm, based on DC control command value Varmdc*, AC control command value Varmac*, zero-phase voltage command value V0*, and circulating voltage command value Vz*. For example, an arm voltage command value Varmpu* for positive-side arm 13pu for the U phase is expressed by "Varmdc*-Varmac*+Vz*-V0". An arm voltage command value Varmnu* for negative-side arm 13nu for the U phase is expressed by "Varmdc*+Varmac*+Vz* +V0". The same applies to an arm voltage command value Varmpv* for positive-side arm 13pv and an arm voltage command value Varmnv* for negative-side arm 13nv for the V phase, and an arm voltage command value Varmpw* for positive-side arm 13pw and an arm voltage command value Varmnw* for negative-side arm 13nw for the W phase.

Modulation command generation unit 427 generates, for each arm voltage command value Varm*, modulation signal Karm* (for example, Karmpu*, Karmnu*, Karmpv*, Karmnv*, Karmpw*, Karmnw*) for causing each of the plurality of converter cells 1 in each arm 13 to output a voltage. Modulation signal Karm* is calculated, for example, by dividing arm voltage command value Varm* for a certain arm 13 by a total voltage value of capacitors 32 and the number of converter cells 1 corresponding to that arm 13. Thereby, influence of pulsation of the capacitor voltage in each arm 13 can be reduced. The voltage actually outputted from each arm 13 has a value close to a value obtained by multiplying an output voltage command value for each arm 13 by a reference value (for example, a rated value) and returning the resultant to a voltage dimension.

<Second Circulating Current Command Generation Unit>

A method of calculating second circulating current command value Iz2* by second circulating current command generation unit 419 and a specific functional configuration of second circulating current command generation unit 419 will be described.

(Method of Calculating Second Circulating Current Command Value)

Second circulating current command generation unit 419 calculates second circulating current command value Iz2* for decreasing voltage pulsation in capacitor 32. When a frequency of an AC-side voltage in an MMC is defined as a fundamental wave frequency, the voltage pulsation in capacitor 32 includes frequency components that are one time and two times the fundamental wave frequency. These frequency components are common components in arm 13, and are based on power flowing into arm 13.

Therefore, the voltage pulsation in capacitor 32 can be decreased by decreasing pulsation of the frequency component that is one time or two times the fundamental wave frequency of the power flowing into arm 13. In the present embodiment, for example, it is assumed that second circulating current command value Iz2* for reducing the one-time component of the fundamental wave frequency of the power flowing into arm 13 is calculated.

As a representative, voltage pulsation occurring in capacitor voltage average value Vcpua of positive-side arm 13pu for the U phase is considered. An output voltage Vpu of positive-side arm 13pu is expressed by the following equation (8), and positive-side arm current Ipu is expressed by the following equation (9). It should be noted that, from the viewpoint of simplification of representation, the following equations are expressed using subscripts, such as $I_{pu}$. For example, "$I_{pu}$ in the equations" is the same as "Ipu in the text and the drawings".

[Math. 1]

$$V_{pu} = V_{armdc} - V_{armacp} \sin(\omega t + \theta) - 2\omega L_{arm} I_{z2amp} \cos(2\omega t + \alpha) \qquad \cdots(8)$$

$$I_{pu} = I_{armdc} - I_{armacp} \sin(\omega t + \phi) + I_{z2amp} \sin(2\omega t + \alpha) \qquad \cdots(9)$$

Varmdc represents a DC component of output voltage Vpu of positive-side arm 13pu, and Varmacp represents an amplitude of a fundamental wave frequency component of output voltage Vpu of positive-side arm 13pu. Iarmdc represents a DC component of positive-side arm current Ipu of positive-side arm 13pu, and Iarmacp represents an amplitude of a fundamental wave frequency component of positive-side arm current Ipu of positive-side arm 13pu. $\omega$ represents an angular frequency of AC system 2, t represents time, Larm represents an inductance value of reactor 7a, and Iz2amp represents an amplitude of second circulating current command value Iz2*. $\theta$ represents a phase difference between a phase of the AC voltage of AC system 2 (hereinafter also referred to as a "reference phase") and a phase of the fundamental wave frequency component of output voltage Vpu. $\alpha$ represents a phase difference between the reference phase and a phase of second circulating current command value Iz2*. $\phi$ represents a phase difference between the reference phase and a phase of the fundamental wave frequency component of positive-side arm current Ipu.

Each AC component in the equations (8) and (9) is decomposed into a sin component and a cos component. Specifically, amplitudes of the sin component and the cos component of the fundamental wave frequency component of output voltage Vpu are denoted by VarmacS and VarmacC, respectively. Amplitudes of the sin component and the cos component of second circulating current command value Iz2* are denoted by Iz2S and Iz2C, respectively. Amplitudes of the sin component and the cos component of the fundamental wave frequency component of positive-side arm current Ipu are denoted by IarmacS and IarmacC, respectively. In this case, the following equations (10) to (15) are established.

[Math. 2]

$$V_{armacS} = V_{armacp} \cos\theta \qquad \cdots(10)$$

$$V_{armacC} = V_{armacp} \sin\theta \qquad \cdots(11)$$

$$I_{z2S} = I_{z2amp} \cos\alpha \qquad \cdots(12)$$

$$I_{z2C} = I_{z2amp} \sin\alpha \qquad \cdots(13)$$

$$I_{armacS} = I_{armacp} \cos\phi \qquad \cdots(14)$$

$$I_{armacC} = I_{armacp} \sin\phi \qquad \cdots(15)$$

When the equations (8) and (9) are modified using the equations (10) to (15), output voltage Vpu is expressed by the following equation (16), and positive-side arm current Ipu is expressed by the following equation (17).

[Math. 3]

$$V_{pu} = V_{armdc} - V_{armacS} \sin\omega t - V_{armacC} \cos\omega t + 2\omega L_{arm} I_{z2C} \sin 2\omega t - 2\omega L_{arm} I_{z2S} \cos 2\omega t \qquad \cdots(16)$$

$$I_{pu} = I_{armdc} - I_{armacS} \sin\omega t - I_{armacC} \cos\omega t + I_{z2S} \sin 2\omega t + I_{z2C} \cos 2\omega t \qquad \cdots(17)$$

Power flowing into positive-side arm 13pu in the fundamental wave frequency component of AC system 2 is denoted by Ppulf, a sin component of the power is denoted by Ppu1fS, and a cos component of the power is denoted by Ppu1fC. In this case, the following equations (18) to (20) are established.

[Math. 4]

$$P_{pu1f} = P_{pu1fS} \sin\omega t + P_{pu1fC} \cos\omega t \qquad \cdots(18)$$

$$P_{pu1fS} = -(V_{armacS} I_{armdc} + V_{armdc} I_{armacS}) + \frac{1}{2}(-V_{armacC} - 2\omega L_{arm} I_{armacS})I_{z2s} + \frac{1}{2}(V_{armacS} - 2\omega L_{arm} I_{armacC})I_{z2c} \qquad \cdots(19)$$

$$P_{pu1fC} = -(V_{armacC} I_{armdc} + V_{armdc} I_{armacC}) + \frac{1}{2}(-V_{armacS} + 2\omega L_{arm} I_{armacC})I_{z2s} + \frac{1}{2}(-V_{armacC} - 2\omega L_{arm} I_{armacS})I_{z2c} \qquad \cdots(20)$$

Here, variables AS, AC, kS, and kC are defined as in the following equations (21) to (24).

[Math. 5]

$$A_S = -(V_{armacS} I_{armdc} + V_{armdc} I_{armacS}) \qquad \cdots(21)$$

$$A_C = -(V_{armacC} I_{armdc} + V_{armdc} I_{armacC}) \qquad \cdots(22)$$

$$k_S = \frac{1}{2}(-V_{armacC} - 2\omega L_{arm} I_{armacS})I_{z2s} + \frac{1}{2}(V_{armacS} - 2\omega L_{arm} I_{armacC})I_{z2c} \qquad \cdots(23)$$

$$k_C = \frac{1}{2}(-V_{armacS} + 2\omega L_{arm} I_{armacC})I_{z2s} + \frac{1}{2}(-V_{armacC} - 2\omega L_{arm} I_{armacS})I_{z2c} \qquad \cdots(24)$$

When the equations (21) to (24) are applied to the equations (18) to (20), power Ppu1f is expressed as in the following equation (25).
[Math. 6]

$$P_{\text{pulf}} = (A_S + k_S) \sin \omega t + (A_C + k_C) \cos \omega t \qquad \cdots (25)$$

When a positive number K is used, variables kS and kC are expressed by equations (26) and (27), respectively.

[Math. 7]

$$k_S = -\frac{A_S}{\sqrt{A_S^2 + A_C^2}} K \qquad \cdots (26)$$

$$k_C = -\frac{A_C}{\sqrt{A_S^2 + A_C^2}} K \qquad \cdots (27)$$

Pulsation of power Ppulf can be reduced by increasing positive number K according to the equations (25) to (27). Further, a vector having a magnitude B and an angle θB is defined as in the following equations (28) and (29).

[Math. 8]

$$B \cos \theta_B = \frac{1}{2} (-V_{\text{armacC}} - 2\omega L_{\text{arm}} I_{\text{armacS}}) \qquad \cdots (28)$$

$$B \sin \theta_B = \frac{1}{2} (-V_{\text{armacS}} + 2\omega L_{\text{arm}} I_{\text{armacC}}) \qquad \cdots (29)$$

When the equations (28) and (29) are applied to the equations (23) and (24), a determinant expressed by the following equation (30) is established.
[Math. 9]

$$\begin{bmatrix} k_S \\ k_C \end{bmatrix} = B \begin{bmatrix} \cos \theta_B & -\sin \theta_B \\ \sin \theta_B & \cos \theta_B \end{bmatrix} \begin{bmatrix} I_{z2s} \\ I_{z2c} \end{bmatrix} \qquad \cdots (30)$$

Further, when it is defined that the right side of the equation (26) is KcosθA, the right side of the equation (27) is KsinθA, and "Iz2amp = K/B", Iz2S and Iz2C are expressed by the following equation (31), from the equation (30).
[Math. 10]

$$\begin{bmatrix} I_{z2s} \\ I_{z2c} \end{bmatrix} = I_{z2\text{amp}} \begin{bmatrix} \cos \theta_B & \sin \theta_B \\ -\sin \theta_B & \cos \theta_B \end{bmatrix} \begin{bmatrix} \cos \theta_A \\ \sin \theta_A \end{bmatrix} \qquad \cdots (31)$$

It should be noted that sinθA, cosθA, sinθB, and cosθB are expressed by the following equations (32), (33), (34), and (35), respectively.

[Math. 11]

$$\sin\theta_A = \frac{(V_{armacC}I_{armdc} + V_{armdc}I_{armacC})}{\sqrt{(V_{armacS}I_{armdc} + V_{armdc}I_{armacS})^2 + (V_{armacC}I_{armdc} + V_{armdc}I_{armacC})^2}} \qquad \cdots(32)$$

$$\cos\theta_A = \frac{(V_{armacS}I_{armdc} + V_{armdc}I_{armacS})}{\sqrt{(V_{armacS}I_{armdc} + V_{armdc}I_{armacS})^2 + (V_{armacC}I_{armdc} + V_{armdc}I_{armacC})^2}} \qquad \cdots(33)$$

$$\sin\theta_B = \frac{(-V_{armacS} + 2\omega L_{arm}I_{armacC})}{\sqrt{(-V_{armacS} + 2\omega L_{arm}I_{armacC})^2 + (-V_{armacC} - 2\omega L_{arm}I_{armacS})^2}} \qquad \cdots(34)$$

$$\cos\theta_B = \frac{(-V_{armacC} - 2\omega L_{arm}I_{armacS})}{\sqrt{(-V_{armacS} + 2\omega L_{arm}I_{armacC})^2 + (-V_{armacC} - 2\omega L_{arm}I_{armacS})^2}} \qquad \cdots(35)$$

Since K and B are values each representing the magnitude (that is, a positive value), in the right side of the equation (31), Iz2amp is positive and the rest of the right side is a unit vector. Therefore, by deriving unit vector components from the equations (31) to (35) and incorporating Iz2amp that is any positive value, it is possible to reduce the frequency component that is one time the fundamental wave frequency of the voltage pulsation in capacitor 32. It should be noted that, regarding the unit vector on the right side of the equation (31), a matrix portion represents a rotation matrix. Further, from the equation (31) and the equations (12) and (13), "α = θA-θB" is obtained. Therefore, second circulating current command value Iz2* is expressed by the following equation (36).

[Math. 12]

$$I_{z2}* = I_{z2amp}\sin(2\omega t + \theta_A - \theta_B) \qquad \cdots(36)$$

(Functional Configuration of Second Circulating Current Command Generation Unit)

A specific functional configuration of second circulating current command generation unit 419 for calculating second circulating current command value Iz2* described above will be described.

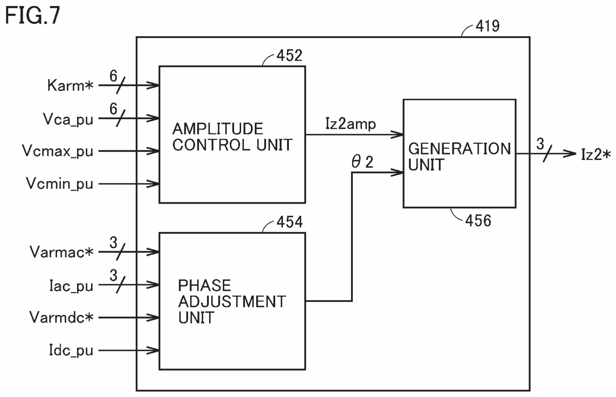

Fig. 7 is a diagram showing an example of a functional configuration of the second circulating current command generation unit according to the first embodiment. Second circulating current command generation unit 419 includes an amplitude control unit 452, a phase adjustment unit 454, and a generation unit 456.

Amplitude control unit 452 receives inputs of six arm voltage command values Varm*, six capacitor voltage average values Vca_pu, capacitor voltage maximum value Vcmax_pu, and capacitor voltage minimum value Vcmin_pu. Amplitude control unit 452 generates amplitude Iz2amp of second circulating current command value Iz2* based on each inputted value. Details of amplitude control unit 452 will be described later.

Phase adjustment unit 454 adjusts a phase θ2 of second circulating current command value Iz2* such that a fundamental frequency component of the voltage of capacitor 32 decreases. Specifically, phase adjustment unit 454 receives inputs of AC control command value Varmac* as an AC component of the arm voltage command value, DC control command value Varmdc* as a DC component thereof, AC current Iac_pu, and DC current Idc_pu.

Phase adjustment unit 454 calculates phase θ2 (= θA-θB) of second circulating current command value Iz2*, using the received parameters, inductance value Larm of the reactor, angular frequency ω of the AC voltage of AC system 2, and the equations (32) to (35). It should be noted that AC current Iac_pu and the DC current Idc_pu may be preset command values, and angular frequency ω may be an angular frequency obtained from a phase locked loop (PLL) or the like, or may be a rated value.

Generation unit 456 generates second circulating current command value Iz2* for each phase, based on amplitude Iz2amp outputted from amplitude control unit 452, phase θ2 outputted from phase adjustment unit 454, and the equation (36).

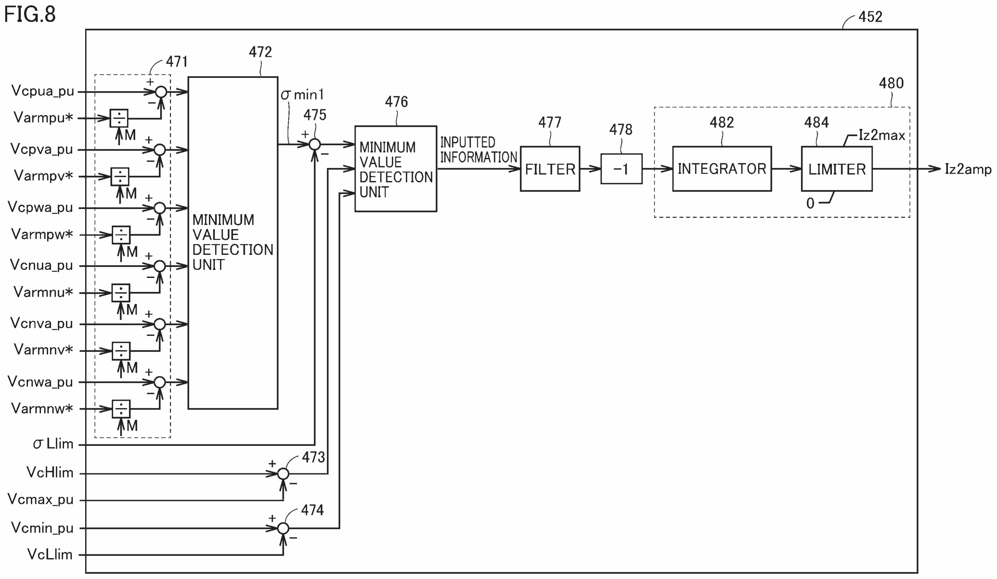

Fig. 8 is a diagram showing a specific exemplary configuration of amplitude control unit 452 according to the first embodiment. Referring to Fig. 8, amplitude control unit 452 includes a computation element 471, a minimum value detection unit 472, subtractors 473, 474, and 475, a minimum value detection unit 476, a filter unit 477, a polarity inversion unit 478, and an amplitude adjustment unit 480. Amplitude adjustment unit 480 includes an integrator 482 and a limiter 484.

Computation element 471 calculates, for each arm 13, a deviation between an average value of the voltages of capacitors 32 included in the arm (that is, a capacitor voltage average value) and a value obtained by dividing the arm voltage command value by number M (that is, the number of converter cells 1 included in arm 13). The value obtained by dividing the arm voltage command value by number M corresponds to a command value for an output voltage of each of the plurality of converter cells 1 included in arm 13.

Specifically, computation element 471 calculates, for positive-side arm 13pu, a deviation $\sigma$pu (= Vepua_pu-Varmpu*/M) between capacitor voltage average value Vcpua_pu and arm voltage command value Varmpu* multiplied by 1/M (that is, Varmpu*/M). Similarly, computation element 471 calculates a deviation $\sigma$pv between capacitor voltage average value Vcpva_pu and arm voltage command value Varmpv* multiplied by 1/M, a deviation $\sigma$pw between capacitor voltage average value Vcpwa_pu and arm voltage command value Varmpw* multiplied by 1/M, a deviation $\sigma$nu between capacitor voltage average value Vcnua_pu arm voltage command value Varmnu* multiplied by 1/M, a deviation $\sigma$nv between capacitor voltage average value Vcnva_pu and arm voltage command value Varmnv* multiplied by 1/M, and a deviation $\sigma$nw between capacitor voltage average value Venwa_pu and arm voltage command value Varmnw* multiplied by 1/M.

Deviations $\sigma$pu, $\sigma$pv, $\sigma$pw, $\sigma$nu, $\sigma$nv, and $\sigma$nw are also collectively referred to as a deviation $\sigma$s. In this case, deviation $\sigma$s indicates an upper-side control margin indicating how much margin the average value of the output voltages of a plurality of capacitors 32 included in arm 13 has with respect to the value obtained by dividing the arm voltage command value for arm 13 by number M (that is, the output voltage command value for each converter cell 1).

For example, a case where, for positive-side arm 13pu for the U phase, deviation $\sigma$pu is negative (that is, a case where arm voltage command value Varmpu* multiplied by 1/M is larger than capacitor voltage average value Vcpua_pu) is considered. In this case, an upper limit value of the output voltage of each converter cell 1 included in positive-side arm 13pu corresponds to "capacitor voltage average value Vcpua_pu", and thus negative deviation $\sigma$pu means an over-modulation state in which a desired voltage cannot be outputted. If the overmodulation state occurs constantly, extra harmonic inflow and outflow may occur. Therefore, each deviation $\sigma$s needs to be constantly kept at a value of 0 or more. That is, it is necessary to keep a minimum value of deviations $\sigma$s at 0 or more.

Minimum value detection unit 472 detects a minimum value $\sigma$minl of deviations $\sigma$pu, $\sigma$pv, $\sigma$pw, $\sigma$nu, $\sigma$nv, and $\sigma$nw (that is, the minimum value of deviations $\sigma$s).

Subtractor 473 calculates a deviation $\sigma$vH (= VcHlim-Vcmax_pu) between an upper limit voltage value VcHlim of capacitor 32 and capacitor voltage maximum value Vcmax_pu. Deviation $\sigma$vH indicates a maximum-side control margin of the capacitor voltage. Subtractor 474 calculates a deviation $\sigma$vL (= Vcmin_pu-VcLlim) between a lower limit voltage value VcLlim of capacitor 32 and capacitor voltage minimum value Vcmin_pu. Deviation $\sigma$vL indicates a minimum-side control margin of the capacitor voltage.

It should be noted that upper limit voltage value VcHlim is determined from, for example, a voltage that can be applied to a capacitor, a rated voltage of a semiconductor element, rated voltages of other components, an insulation voltage, and the like. Lower limit voltage value VcLlim is determined from a lower limit value of the capacitor voltage at which power converter 6 can be normally operated.

Subtractor 475 calculates a deviation $\sigma$cL (= $\sigma$min1-$\sigma$Llim) between minimum value $\sigma$min1 and a control margin lower limit value $\sigma$Llim. Deviation $\sigma$cL is a minimum value of the upper-side control margin. It should be noted that control margin lower limit value $\sigma$Llim is set to 0 or a very small positive value.

When the pulsation of the capacitor voltage decreases, deviation $\sigma$cL, deviation $\sigma$vH, and deviation $\sigma$vL increase. When phase $\theta2$ (= $\theta$A-$\theta$B) of second circulating current command value Iz2* satisfies the equations (32) to (36), deviation $\sigma$cL, deviation $\sigma$vH, and deviation $\sigma$vL can be increased by increasing amplitude Iz2amp. By increasing amplitude Iz2amp when deviation $\sigma$cL, deviation ovH, and deviation $\sigma$vL are negative values, and decreasing amplitude Iz2amp when they are positive values, the control margin can be set to 0 or more, using second circulating current command value Iz2* which is as small as possible.

Minimum value detection unit 476 detects a minimum value $\sigma$min2 of deviation $\sigma$cL, deviation $\sigma$vH, and deviation $\sigma$vL (that is, a value having the smallest degree of control margin). Minimum value $\sigma$min2 is inputted as an input value to filter unit 477. Minimum value $\sigma$min2 is a minimum control margin when all of deviation $\sigma$cL, deviation $\sigma$vH, and deviation $\sigma$vL are considered.

Filter unit 477 receives minimum value $\sigma$min2 as an input value, filters the input value, and outputs an output value. Since the input value is a minimum value of the degree of control margin of the output voltage of each arm 13, the input value instantaneously has pulsation.

It is necessary to calculate second circulating current command value Iz2* based on the minimum value in a certain time width (for example, one cycle of the voltage of AC system 2). Accordingly, filter unit 477 has a function of detecting the minimum value.

In one aspect, filter unit 477 has the detection function, and when an input value inputted to filter unit 477 in a present control cycle (hereinafter also referred to as a "present input value") is less than an output value outputted from filter unit 477 in a previous control cycle (hereinafter also referred to as a "previous output value"), filter unit 477 outputs a value identical to the present input value, as a present output value (that is, an output value outputted from filter unit 477 in the present control cycle).

Further, when the present input value is more than or equal to the previous output value, filter unit 477 outputs a value that is less than or equal to the present input value and is more than or equal to the previous output value, as a present output value. In this case, for example, filter unit 477 gradually increases the output value.

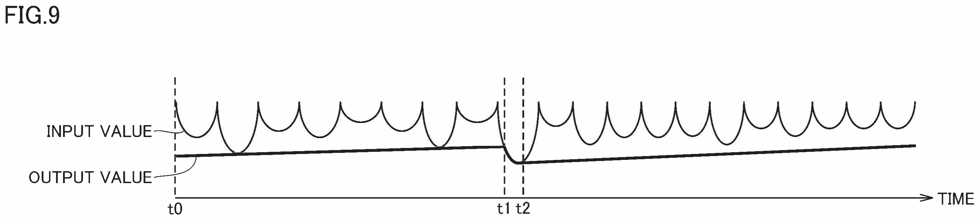

Fig. 9 is a diagram for illustrating an example of the function of the filter unit. Referring to Fig. 9, filter unit 477 performs, for each control cycle, comparison in magnitude between a present input value and a previous output value. In the example in Fig. 9, in a period from a time point t0 to a time point t1, filter unit 477 determines that a present input value is more than or equal to a previous output value, and outputs a value that is less than or equal to the present input value and is more than or equal to the previous output value, as a present output value. Accordingly, filter unit 477 gradually increases the output value.

On the other hand, in a period from time point t1 to a time point t2, filter unit 477 determines that a present input value is less than a previous output value. Accordingly, filter unit 477 outputs a value identical to the present input value, as a present output value. After that, in a period after time point t2, filter unit 477 determines that a present input value is less than a previous output value, and gradually increases the output value.

In another aspect, when an input value does not become less than an output value at an n-th (where n is an integer that is more than or equal to 1) update timing within a specified period from the n-th update timing, filter unit 477 sets a timing after a lapse of the specified period from the n-th update timing, as an (n+1)-th update timing. In this case, filter unit 477 outputs a minimum value of the input value within the specified period from the n-th update timing, as an output value at the (n+1)-th update timing.

On the other hand, when the input value becomes less than the output value at the n-th update timing within the specified period from the n-th update timing, filter unit 477 sets a first timing at which the input value becomes less than the output value at the n-th update timing, as an (n+1)-th update timing, and after the first timing, filter unit 477 outputs a value identical to a present input value, as a present output value, until the present input value becomes more than or equal to a previous output value.

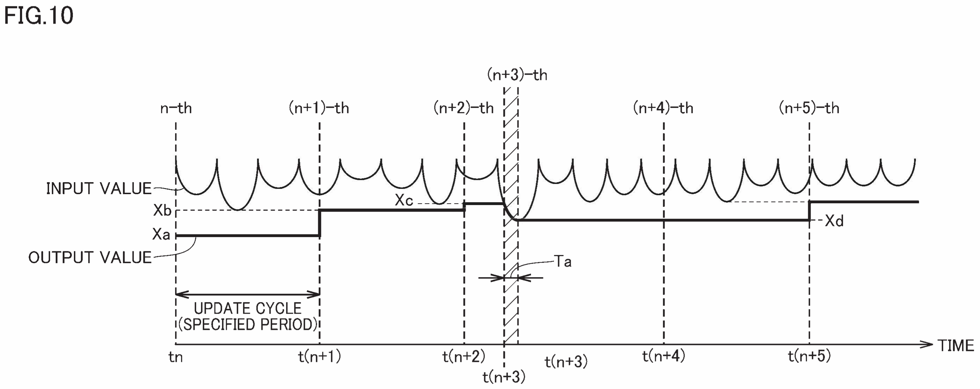

Fig. 10 is a diagram for illustrating another example of the function of the filter unit. Referring to Fig. 10, filter unit 477 basically updates an output value for each predetermined update cycle. For example, it is assumed that an n-th update timing is set at a time point tn, and an output value at that update timing is Xa. Filter unit 477 determines whether or not an input value becomes less than output value Xa within a specified period (that is, the update cycle) from the n-th update timing.

In the example in Fig. 10, since the input value does not become less than output value Xa within the specified period from the n-th update timing, filter unit 477 sets a time point t(n+1), which is a timing after a lapse of the specified period from the n-th update timing, as an (n+1)-th update timing. Further, filter unit 477 outputs Xb, which is a minimum value of the input value within the specified period from the n-th update timing, as an output value at the (n+1)-th update timing.

Similarly, filter unit 477 sets a time point t(n+2) as an (n+2)th update timing, and outputs Xc, which is a minimum value of the input value within the specified period from the (n+1)th update timing, as an output value at the (n+2)th update timing.

On the other hand, at a time point t(n+3), the input value becomes less than output value Xc within the specified period from the (n+2)th update timing. In this case, filter unit 477 sets time point t(n+3) as an (n+3)th update timing. Further, after time point t(n+3), filter unit 477 outputs a value identical to a present input value, as a present output value, until the present input value becomes more than or equal to a previous output value (for example, until a time Ta elapses from time point t(n+3) in Fig. 10).

After a lapse of time Ta from time point t(n+3), the input value becomes more than or equal to an output value Xd, and thus filter unit 477 continues to output output value Xd. Subsequently, filter unit 477 sets a time point t(n+4), which is a timing after a lapse of the specified period from a timing after a lapse of time Ta from time point t(n+3), as an (n+4)th update timing. Further, filter unit 477 outputs Xd, which is a minimum value of the input value within the specified period from the t(n+4)th update timing, as an output value at the (n+4)th update timing.

Since the configuration of filter unit 477 described above enables formation of a filter having a high sensitivity with respect to a direction in which the input value decreases, when any one of deviation σcL, deviation σvH, and deviation σvL decreases, it is possible to quickly increase amplitude Iz2amp of second circulating current command value Iz2* and increase the degree of control margin. Further, by gradually increasing the output value with respect to a direction in which the input value increases, detection of pulsation per control cycle is suppressed, and pulsation is not generated in amplitude Iz2amp.

Referring again to Fig. 8, polarity inversion unit 478 outputs a value obtained by inverting polarity of the output value of filter unit 477 (that is, a value obtained by multiplying the output value by "-1"). It should be noted that polarity inversion unit 478 may be provided at a stage before filter unit 477, or may be provided at a stage after integrator 482. In that case, it is necessary to ensure consistency in the positive/negative polarity and the magnitude of the values. For example, in a case where polarity inversion unit 478 is provided at the stage before filter unit 477, filter unit 477 is configured to have a high sensitivity when a present input value becomes more than a previous output value.

Amplitude adjustment unit 480 adjusts amplitude Iz2amp of second circulating current command value Iz2* based on the output value of filter unit 477. Specifically, integrator 482 of amplitude adjustment unit 480 receives an input of the value obtained by inverting the polarity of the output value of filter unit 477 from polarity inversion unit 478, and outputs a value obtained by time-integrating the value.

Limiter 484 outputs a value obtained by limiting the output value of integrator 482 using a specified limit value (for example, an upper limit value and a lower limit value), as amplitude Iz2amp of second circulating current command value Iz2*. Specifically, limiter 484 outputs a value obtained by limiting the output value of integrator 482 to be more than or equal to the lower limit value and less than or equal to the upper limit value, as amplitude Iz2amp. For example, the lower limit value is set to 0, and the upper limit value is set to Iz2max. That is, amplitude Iz2amp is limited to more than or equal to 0 and less than or equal to Iz2max.

It should be noted that, if the lower limit value of amplitude Iz2amp is not limited to 0, when deviation $\sigma$cL, deviation $\sigma$vH, and deviation $\sigma$vL are large, there flows a circulating current in accordance with second circulating current command value Iz2* having negative amplitude Iz2amp such that a minimum value of any of these deviations becomes 0, and thereby voltage pulsation in capacitor 32 increases. In this case, power loss increases, and the voltage pulsation in capacitor 32 unnecessarily increases. Accordingly, it is necessary to prevent amplitude Iz2amp from being negative by limiter 484.

It should be noted that, although the example in Fig. 8 has described the configuration in which amplitude Iz2amp is calculated based on minimum value $\sigma$min2 of deviation $\sigma$cL, deviation $\sigma$vH, and deviation $\sigma$vL, the present disclosure is not limited to such a configuration. Second circulating current command generation unit 419 (specifically, amplitude control unit 452) may be configured to calculate amplitude Iz2amp using any one or two of deviation $\sigma$cL, deviation $\sigma$vH, and deviation $\sigma$vL.

Specifically, amplitude control unit 452 may calculate a control margin that is based on one or more representative values of the voltages of capacitors 32 and one or more representative command values respectively corresponding to the one or more representative values, and control amplitude Iz2amp based on at least one control margin.

In one example, a representative value is minimum value $\sigma$min1 of deviations $\sigma$pu to $\sigma$nw. A representative command value corresponding to the representative value is control margin lower limit value $\sigma$Llim. In this case, amplitude control unit 452 calculates deviation $\sigma$cL obtained by subtracting control margin lower limit value $\sigma$Llim from minimum value $\sigma$min1, as a control margin, and controls amplitude Iz2amp based on the control margin. The control margin is inputted as an input value of filter unit 477. It should be noted that, in this case, it is not necessary to set upper limit voltage value VcHlim and lower limit voltage value VcLlim, and capacitor voltage maximum value Vcmax_pu and capacitor voltage minimum value Vcmin_pu may not be inputted to amplitude control unit 452.

In another example, a representative value is capacitor voltage maximum value Vcmax_pu. A representative command value corresponding to the representative value is upper limit voltage value VcHlim of capacitor 32. In this case, amplitude control unit 452 calculates deviation $\sigma$vH obtained by subtracting capacitor voltage maximum value Vcmax_pu from upper limit voltage value VcHlim, as a control margin, and controls amplitude Iz2amp based on the control margin.

In still another example, a representative value is capacitor voltage minimum value Vcmin_pu. A representative command value corresponding to the representative value is lower limit voltage value VcLlim of capacitor 32. In this case, amplitude control unit 452 calculates deviation $\sigma$vL obtained by subtracting lower limit voltage value VcLlim from capacitor voltage minimum value Vcmin_pu, as a control margin, and controls amplitude Iz2amp based on the control margin.

It should be noted that amplitude control unit 452 may be configured to select two of deviations $\sigma$pu to $\sigma$nw and calculate amplitude Iz2amp using a minimum value of the two deviations.

<Advantages>

According to the first embodiment, during a normal operation of power converter 6, it is possible to suppress an increase in power loss as much as possible while reducing voltage pulsation in capacitor 32 of converter cell 1.

Second Embodiment.

The first embodiment has described the configuration that the control margin is adjusted by controlling amplitude Iz2amp of second circulating current command value Iz2*. On the other hand, the control margin can also be adjusted by performing control for adjusting a phase of zero-phase voltage command value V0*. However, when amplitude control for amplitude Iz2amp and phase adjustment control for zero-phase voltage command value V0* are simultaneously performed, the control margin may not be appropriately adjusted. Accordingly, in a second embodiment, a configuration in which one of the amplitude control and the phase adjustment control is stopped as necessary will be described.

<Functional Configuration of Control Device>

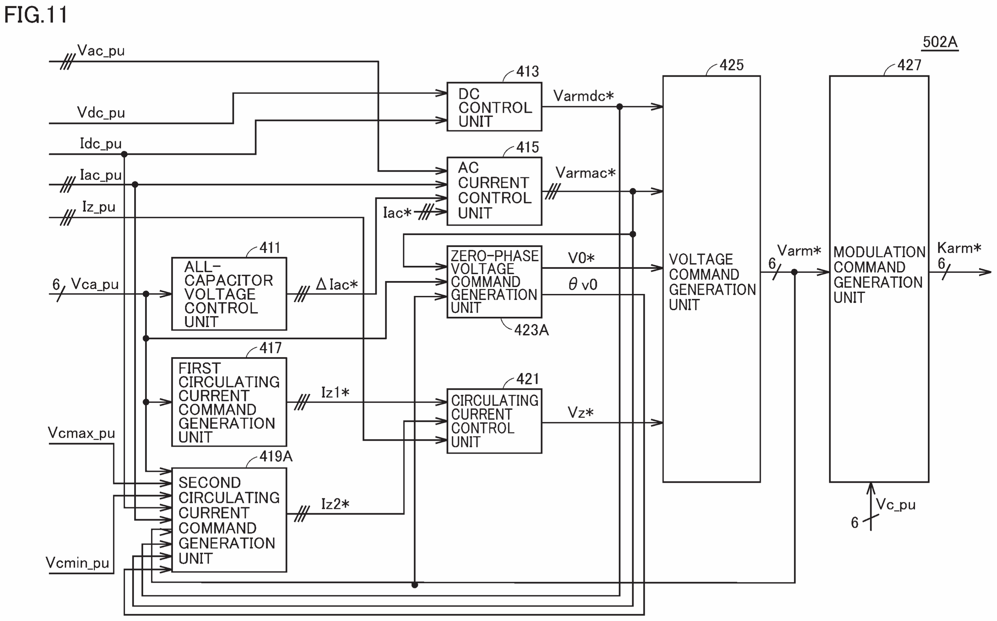

Control device 5 according to the second embodiment has an internal configuration similar to that in Fig. 4. A basic control unit 502A according to the second embodiment has a functional configuration shown in Fig. 11 described below, in addition to electrical quantity calculation unit 401, average value calculation unit 402, maximum value detection unit 403, minimum value detection unit 404, normalization unit 405, and capacitor voltage command generation unit 406 shown in Fig. 5. It should be noted that a symbol "A" is added to basic control unit 502A for convenience, in order to distinguish it from basic control unit 502 according to the first embodiment.

Fig. 11 is a diagram showing a functional configuration of a part of basic control unit 502A according to the second embodiment. The configuration of basic control unit 502A shown in Fig. 11 corresponds to a configuration including a second circulating current command generation unit 419A and a zero-phase voltage command generation unit 423A, instead of second circulating current command generation unit 419 and zero-phase voltage command generation unit 423 shown in Fig. 6, respectively.

Second circulating current command generation unit 419A generates second circulating current command value Iz2*, based on DC current Idc_pu, AC current Iac_pu, each capacitor voltage average value Vca_pu, capacitor voltage maximum value Vccmax_pu, capacitor voltage minimum value Vcmin_pu, DC control command value Varmdc*, AC control command value Varmac*, each arm voltage command value Varm*, and an adjustment phase θv0 of a zero-phase voltage. A detailed configuration of second circulating current command generation unit 419A will be described later.

Zero-phase voltage command generation unit 423A generates zero-phase voltage command value V0*, and generates adjustment phase θv0 for adjusting the phase of zero-phase voltage command value V0*.

(Zero-Phase Voltage Command Generation Unit)

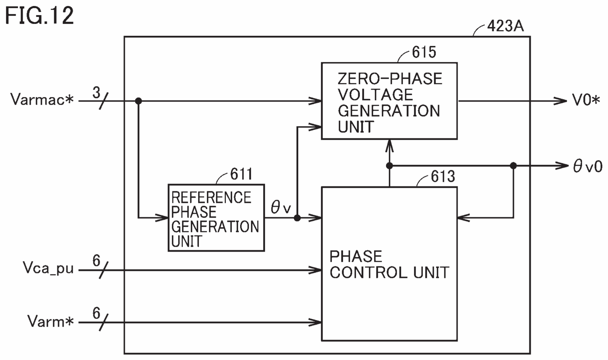

Fig. 12 is a diagram showing a functional configuration of the zero-phase voltage command generation unit according to the second embodiment. Referring to Fig. 12, zero-phase voltage command generation unit 423A includes a reference phase generation unit 611, a phase control unit 613, and a zero-phase voltage generation unit 615.

Reference phase generation unit 611 generates a reference phase θv based on AC control command value Varmac* for each phase. For example, reference phase generation unit 611 generates a phase when an AC control command value VarmacU* for the U phase becomes equal to an amplitude VacU of the U-phase AC voltage, as reference phase θv. In this case, AC control command value VarmacU* is expressed as in an equation (37).

[Math. 13]

$$V_{\mathrm{armacU}}^* = V_{\mathrm{acU}} \cos(\omega t - \theta_V) \qquad \cdots (37)$$

Phase control unit 613 controls the phase of zero-phase voltage command value V0* for power converter 2. Phase control unit 613 generates adjustment phase θv0, based on reference phase θv, each capacitor voltage average value Vca_pu, and each arm voltage command value Varm*. A specific configuration of phase control unit 613 will be described later.

Zero-phase voltage generation unit 615 generates zero-phase voltage command value V0*, based on AC control command value Varmac* for each phase, reference phase θv, and adjustment phase θv0. Specifically, zero-phase voltage generation unit 615 generates zero-phase voltage command value V0* using the following equation (38). It should be noted that β is a constant, and is 1/6, for example.

[Math. 14]

$$V_{\mathrm{o}}^* = -\beta V_{\mathrm{acU}} \cos 3(\omega t - \theta_V - \theta_{V0}) \qquad \cdots (38)$$

A control method for adjusting the phase of zero-phase voltage command value V0* will be described.

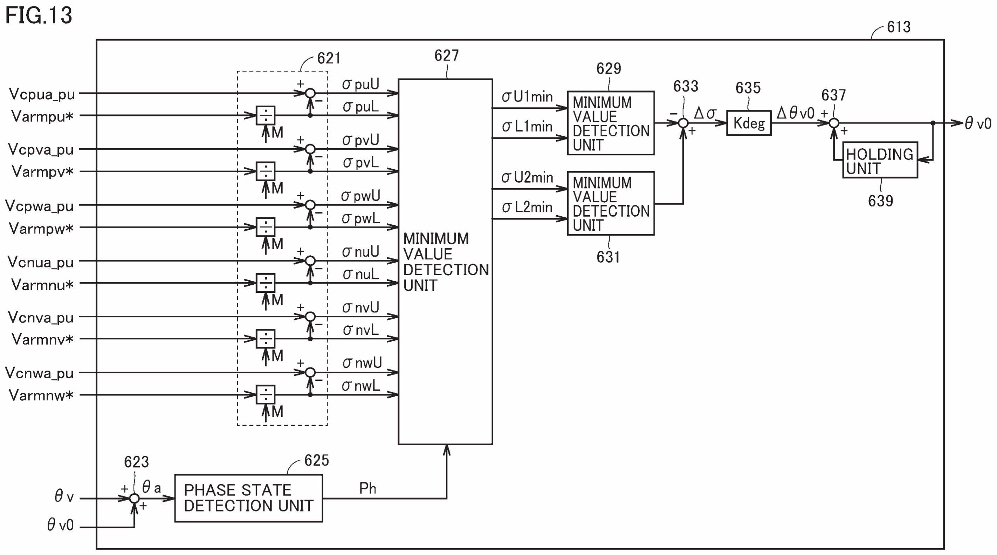

Fig. 13 is a diagram showing a functional configuration of the phase control unit according to the second embodiment. Referring to Fig. 13, phase control unit 613 calculates, for each of the plurality of arms, a control margin that is based on the voltages of capacitors 32 included in the arm and the arm voltage command value for the arm, and calculates adjustment phase θv0 for adjusting the phase of zero-phase voltage command value V0* based on each control margin. Specifically, phase control unit 613 includes a computation element 621, an adder 623, a phase state detection unit 625, minimum value detection units 627, 629, and 631, a subtractor 633, a proportioner 635, an adder 637, and a holding unit 639.

Computation element 621 calculates, for each arm 13, a deviation between an average value of the voltages of capacitors 32 included in the arm (that is, a capacitor voltage average value) and a value obtained by dividing the arm voltage command value by number M. Specifically, computation element 621 outputs an upper-side control margin σpuU, which is a deviation (= Vcpua_pu-Varmpu*/M) between capacitor voltage average value Vcpua_pu and arm voltage command value Varmpu* multiplied by 1/M. Deviation σpuU corresponds to deviation σpu described with reference to Fig. 8. Similarly, computation element 621 outputs deviations σpv, σpw, σnu, σnv, and σnw described with reference to Fig. 8, as upper-side control margins σpvU, σpwU, σnuU, σnvU, and σnwU, respectively. Hereinafter, the upper-side control margins are also simply referred to as "upper margins".

Computation element 621 outputs Varmpu*/M, Varmpv*/M, Varmpw*/M, Varmnu*/M, Varmnv*/M, and Varmnw*/M, as lower-side control margins σpuL, σpvL, σpwL, σnuL, σnvL, and σnwL, respectively. Hereinafter, the lower-side control margins are also simply referred to as "lower margins".

Adder 623 adds reference phase θv and adjustment phase θv0 to calculate a phase θa.

Phase state detection unit 625 divides one cycle of AC system 2 into six sections, and outputs a section Ph (for example, Ph = 0 to 5) corresponding to phase θa. Specifically, Ph = 0 in the case of $0° < θa ≤ 60°$, Ph = 1 in the case of $60° < θa ≤ 120°$, Ph = 2 in the case of $120° < θa ≤ 180°$, Ph = 3 in the case of $180° < θa ≤ 240°$, Ph = 4 in the case of $240° < θa ≤ 300°$, and Ph = 5 in the case of $300° < θa ≤ 360°$.

Minimum value detection unit 627 monitors the upper margins and the lower margins set in each section Ph (Ph = 0 to 5), and calculates a first upper margin minimum value σU1min, a second upper margin minimum value σU2min, a first lower margin minimum value σL1min, and a second lower margin minimum value σL2min.

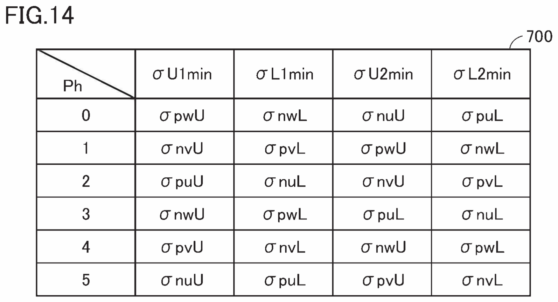

Fig. 14 is a diagram showing the upper-side control margins and the lower-side control margins monitored in each section. Referring to Fig. 14, a table 700 shows the upper margins and the lower margins that can be minimum values in each section Ph. For example, in Ph = 0, upper margin σpwU, lower margin σnwL, upper margin σnuU, and lower margin σpuL can be first upper margin minimum value σU1min, first lower margin minimum value σL1min, second upper margin minimum value σU2min, and second lower margin minimum value σL2min, respectively.

For each section Ph, minimum value detection unit 627 calculates first upper margin minimum value σU1min, first lower margin minimum value σL1min, second upper margin minimum value σU2min, and second lower margin minimum value σL2min in a present section Ph (for example, Ph = 0), at a timing immediately before switching from present section Ph to a subsequent section Ph (for example, Ph = 1). For example, in Ph = 0, minimum value detection unit 627 calculates a minimum value of upper margin σpwU as first upper margin minimum value σU1min, calculates a minimum value of lower margin σnwL as first lower margin minimum value σL1min, calculates a minimum value of upper margin σnuU as second upper margin minimum value σU2min, and calculates a minimum value of lower margin σpuL as second lower margin minimum value σL2min.

Referring again to Fig. 13, minimum value detection unit 629 detects a smaller value of first upper margin minimum value σU1min and first lower margin minimum value σL1min. Minimum value detection unit 631 detects a smaller value of second upper margin minimum value σU2min and second lower margin minimum value σL2min. Subtractor 633 outputs a difference Δσ obtained by subtracting the value detected by minimum value detection unit 629 from the value detected by minimum value detection unit 631.

Proportioner 635 outputs a multiplication value "Δσ×Kdeg" of difference Δσ and a gain Kdeg, as a change amount Δθv0 of adjustment phase θv0. Adder 637 outputs an addition value of change amount Δθv0 and an output value of holding unit 639, as adjustment phase θv0. Holding unit 639 holds adjustment phase θv0 outputted from adder 637 in a previous section Ph. Therefore, adjustment phase θv0 outputted from adder 637 in present section Ph corresponds to the sum of adjustment phase θv0 in previous section Ph and change amount Δθv0 calculated in present section Ph.

Zero-phase voltage generation unit 615 shown in Fig. 12 generates zero-phase voltage command value V0*, based on AC control command value Varmac* for each phase, reference phase θv, and adjustment phase θv0 calculated as described above. How the control margins are changed by zero-phase voltage command value V0* generated in this manner will be specifically described.

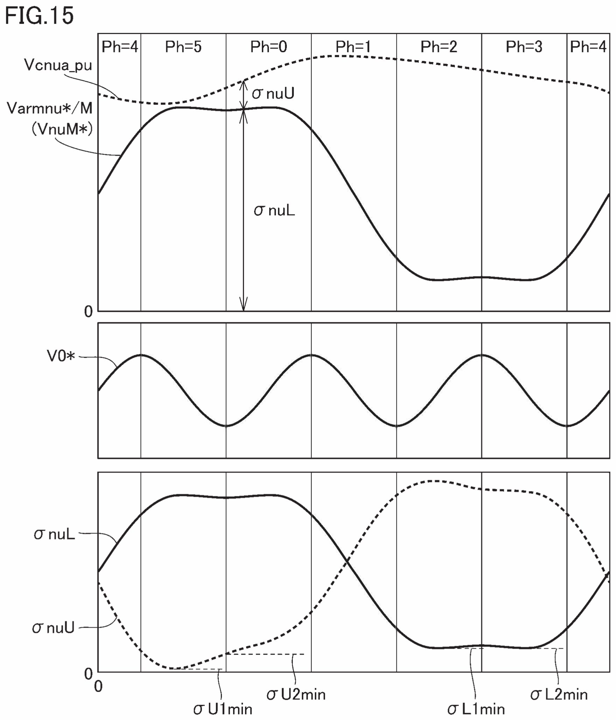

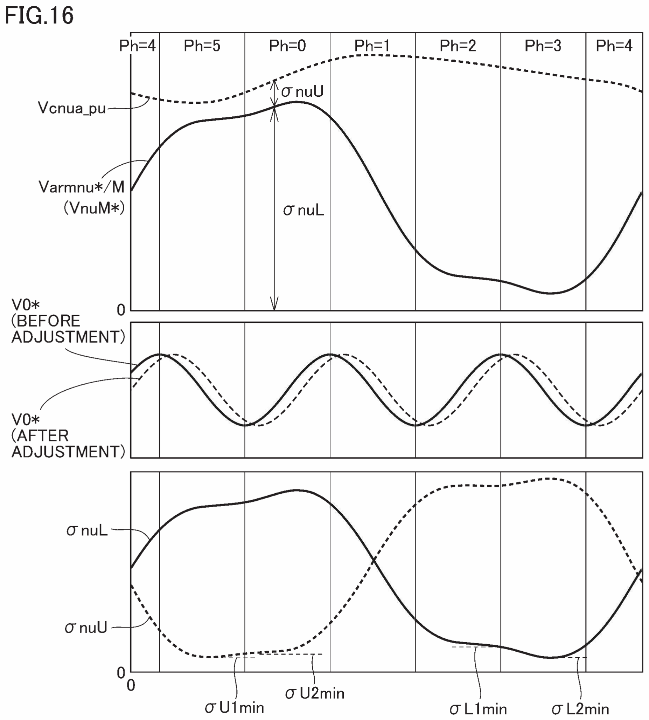

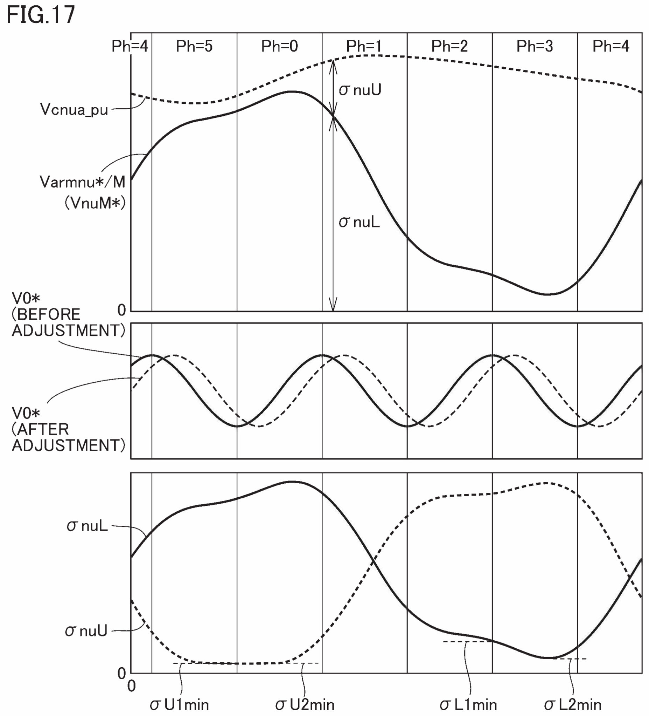

Fig. 15 is a diagram of various waveforms in each section before adjustment of the phase of the zero-phase voltage command value. Fig. 15 shows capacitor voltage average value Vcnua_pu, arm voltage command value Varmnu* multiplied by 1/M (hereinafter also simply referred to as a voltage command value VnuM*), upper margin σnuU, lower margin anuL, and zero-phase voltage command value V0*. Here, a description will be given for negative-side arm 13nu, as an example. The same applies to Figs. 16 and 17 described below.

Referring to table 700 in Fig. 14 with a focus on negative-side arm 13nu, upper margin σnuU can be first upper margin minimum value σU1min in the case of Ph = 5, and can be second upper margin minimum value σU2min in the case of Ph = 0. This is consistent with the fact that, in Fig. 15, a minimum value of upper margin σnuU in the section of Ph = 5 is shown as first upper margin minimum value σU1min, and a minimum value of upper margin σnuU in the section of Ph = 0 is shown as second upper margin minimum value σU2min.

Similarly, referring to table 700 in Fig. 14, lower margin σnuL can be first lower margin minimum value σL1min in the case of Ph = 2, and can be second lower margin minimum value σL2min in the case of Ph = 3. This is consistent with the fact that, in Fig. 15, a minimum value of lower margin σnuL in the section of Ph = 2 is shown as first lower margin minimum value σL1min, and a minimum value of lower margin σnuL in the section of Ph = 3 is shown as second upper margin minimum value σL2min.

According to Fig. 15, it is understood that, before the adjustment of the phase of zero-phase voltage command value V0*, first upper margin minimum value σU1min is particularly small.

Fig. 16 is an example of a diagram of various waveforms in each section after the adjustment of the phase of the zero-phase voltage command value. Referring to Fig. 16, it can be seen that, when the phase of zero-phase voltage command value V0* is adjusted based on adjustment phase θv0 first upper margin minimum value σU1min is larger than that before the adjustment of the phase of zero-phase voltage command value V0* shown in Fig. 15. Specifically, first upper margin minimum value σU1min is equal to second lower margin minimum value σL2min.

Fig. 17 is another example of the diagram of various waveforms in each section after the adjustment of the phase of the zero-phase voltage command value. Referring to Fig. 17, it can be seen that first upper margin minimum value σU1min is larger than that before the adjustment of the phase of zero-phase voltage command value V0* shown in Fig. 15. Specifically, first upper margin minimum value σU1min is equal to second upper margin minimum value σU2min.

Thus, by adjusting the phase of zero-phase voltage command value V0*, the control margin of the voltage command value with respect to an output voltage range can be increased in power conversion device 100 as a whole.

(Second Circulating Current Command Generation Unit)

Next, a specific configuration of second circulating current command generation unit 419A according to the second embodiment will be described.

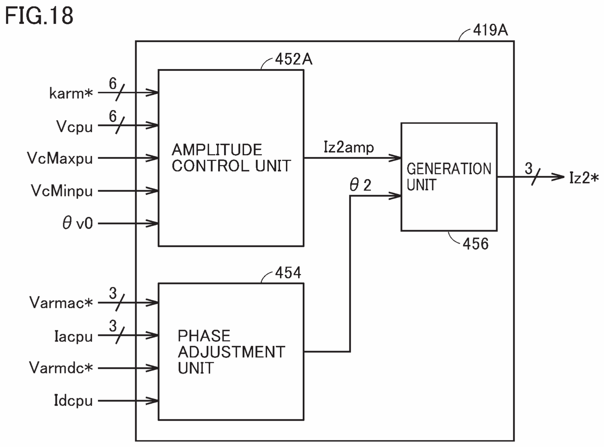

Fig. 18 is a diagram showing an example of a functional configuration of the second circulating current command generation unit according to the second embodiment. Referring to Fig. 18, second circulating current command generation unit 419A includes an amplitude control unit 452A, phase adjustment unit 454, and generation unit 456. The configurations of phase adjustment unit 454 and generation unit 456 are the same as those described with reference to Fig. 7. Amplitude control unit 452A is different from amplitude control unit 452 according to the first embodiment in that amplitude Iz2amp of second circulating current command value Iz2* is generated using adjustment phase θv0.

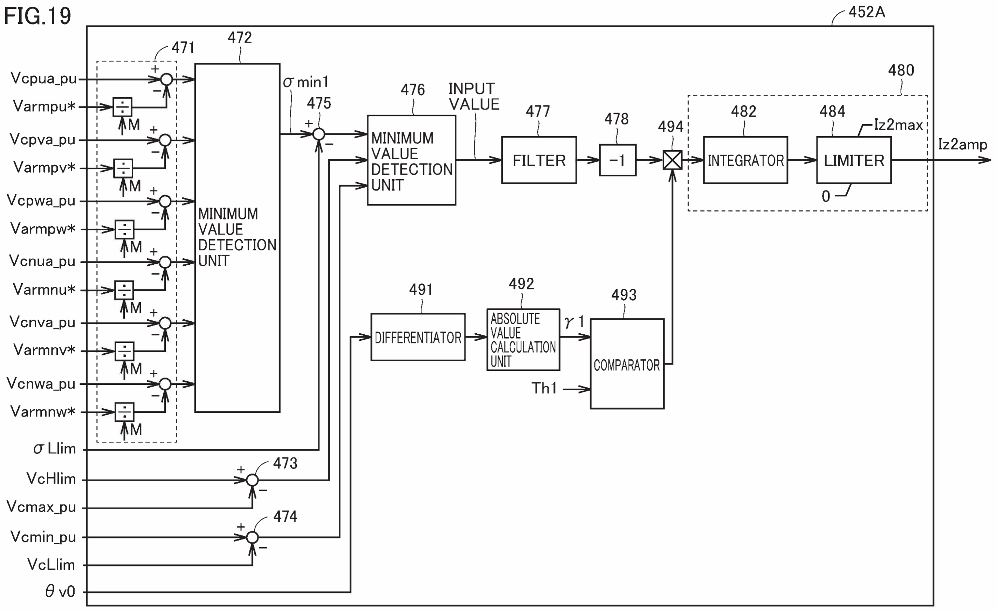

Fig. 19 is a diagram showing a specific exemplary configuration of the amplitude control unit according to the second embodiment. Referring to Fig. 19, amplitude control unit 452A has a configuration obtained by adding a differentiator 491, an absolute value calculation unit 492, a comparator 493, and a multiplier 494 to amplitude control unit 452 in Fig. 8.

Differentiator 491 time-differentiates adjustment phase θv0. Absolute value calculation unit 492 calculates an absolute value $\gamma1$ of a value obtained by time-differentiating adjustment phase θv0. Absolute value $\gamma1$ indicates the magnitude of a temporal change of adjustment phase θv0. Comparator 493 outputs a value "1" when absolute value $\gamma1$ is less than or equal to a threshold value Th1 (that is, $\gamma1 \leq Th1$). Comparator 493 outputs a value "0" when absolute value $\gamma1$ is larger than threshold value Th1 (that is, $\gamma1 > Th1$).

Multiplier 494 calculates a multiplication value of the output value of polarity inversion unit 478 and the output value of comparator 493. Specifically, multiplier 494 outputs the output value of polarity inversion unit 478 to integrator 482 in the case of $\gamma1 \leq Th1$, and outputs the value "0" to integrator 482 in the case of $\gamma1 > Th1$.

Thereby, when the temporal change of adjustment phase θv0 is small (for example, $\gamma1 \leq Th1$), amplitude Iz2amp is controlled based on the control margin, by the same method as that in the first embodiment. On the other hand, when the temporal change of adjustment phase θv0 is large (for example, $\gamma1 > Th1$), the input value to integrator 482 becomes "0". In this case, integrator 482 outputs amplitude Iz2amp calculated in a previous control cycle to limiter 484. Thus, amplitude Iz2amp is not updated and is fixed to a previous value.

As described above, when the magnitude of the temporal change of adjustment phase θv0 of zero-phase voltage command value V0* is larger than threshold value Th1, amplitude control unit 452 stops update control for amplitude Iz2amp using the control margin. This is because, when the temporal change of adjustment phase θv0 is large, the upper margin has a large change, and therefore, if control for amplitude Iz2amp is simultaneously performed, the control becomes unstable. On the other hand, when the temporal change of adjustment phase θv0 of zero-phase voltage command value V0* is small, the update control for amplitude Iz2amp may not be stopped.

Based on the same idea, when the change in amplitude Iz2amp is large, update of adjustment phase θv0 of zero-phase voltage command value V0* may be stopped.

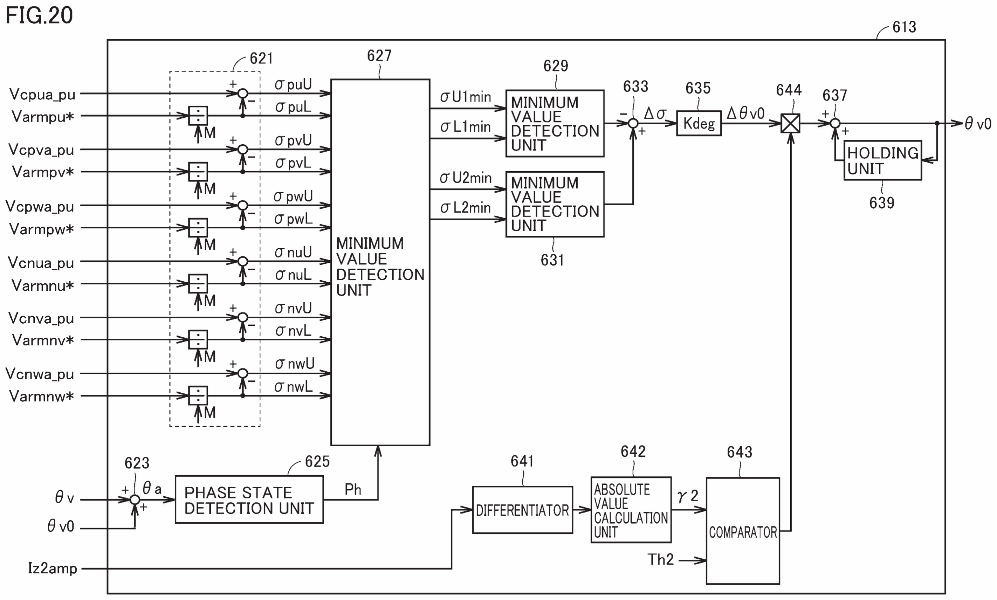

Fig. 20 is a diagram showing a functional configuration of a phase control unit according to a modification of the second embodiment. Referring to Fig. 20, a phase control unit 613A has a configuration obtained by adding a differentiator 641, an absolute value calculation unit 642, a comparator 643, and a multiplier 644 to phase control unit 613 in Fig. 13.

Differentiator 641 time-differentiates amplitude Iz2amp. Absolute value calculation unit 642 calculates an absolute value $\gamma2$ of a value obtained by time-differentiating amplitude Iz2amp. Absolute value $\gamma2$ indicates the magnitude of a temporal change of amplitude Iz2amp. Comparator 643 outputs a value "1" when absolute value $\gamma2$ is less than or equal to a threshold value Th2 (that is, $\gamma2 \leq Th2$). Comparator 643 outputs a value "0" when absolute value $\gamma2$ is larger than threshold value Th2 (that is, $\gamma2 > Th2$).

Multiplier 644 calculates a multiplication value of the output value of proportioner 635 and the output value of comparator 643. Specifically, multiplier 644 outputs the output value of proportioner 635 to adder 637 in the case of $\gamma2 \le$ Th2, and outputs the value "0" to adder 637 in the case of $\gamma2 >$ Th2.

Thereby, when the temporal change of amplitude Iz2amp is small (for example, $\gamma2 \le$ Th2), adjustment phase $\theta$v0 is updated by the method described with reference to Fig. 13. On the other hand, when the temporal change of amplitude Iz2amp is large (for example, $\gamma2 >$ Th2), the input value to adder 637 becomes "0". In this case, adder 637 outputs the output value of holding unit 639 (that is, adjustment phase $\theta$v0 calculated in previous section Ph), as adjustment phase $\theta$v0 in present section Ph. Thereby, adjustment phase $\theta$v0 is not updated, and is fixed to a previous value.

As described above, when the magnitude of the temporal change of amplitude Iz2amp is larger than threshold value Th2, phase control unit 613 calculates previous adjustment phase $\theta$v0 as present adjustment phase $\theta$v0. That is, update control for adjustment phase $\theta$v0 of zero-phase voltage command value V0* is stopped. On the other hand, when the temporal change of amplitude Iz2amp is small, the update control for adjustment phase $\theta$v0 of zero-phase voltage command value V0* may not be stopped.

<Advantages>

According to the second embodiment, it is possible to prevent a phenomenon in which control becomes unstable by simultaneously performing control of the amplitude of the second circulating current command value and control of the phase of the zero-phase voltage command value.

Other Embodiments.

The configuration exemplified as each of the embodiments described above is an exemplary configuration of the present disclosure, and can be combined with another known technique, or can be configured as being modified, for example, partially omitted, without departing from the gist of the present disclosure. Further, in each of the embodiments described above, the processing and the configuration described in another embodiment may be adopted and performed as appropriate.

It should be understood that the embodiments disclosed herein are illustrative and non-restrictive in every respect. The scope of the present disclosure is defined by the scope of the claims, rather than the description above, and is intended to include any modifications within the scope and meaning equivalent to the scope of the claims.

REFERENCE SIGNS LIST

1: converter cell; 2: AC system; 3: voltage transformer; 4: DC circuit; 5: control device; 6: power converter; 7a, 7b: reactor; 8u, 8v, 8w: leg circuit; 9a, 9b: arm current detector; 10: AC voltage detector; 11a, 11b: DC voltage detector; 13nu, 13nv, 13nw: negative-side arm; 13pu, 13pv, 13pw: positive-side arm; 15: AC current detector; 31n, 31p: switching element; 32: capacitor; 33: voltage detector; 34: bypass switch; 70: input converter; 71: sample hold circuit; 72: multiplexer; 73: A/D converter; 74: CPU; 75: RAM; 76: ROM; 77: input/output interface; 78: auxiliary storage device; 79: bus; 100: power conversion device; 401: electrical quantity calculation unit; 402: average value calculation unit; 403: maximum value detection unit; 404, 472, 476, 627, 629, 631: minimum value detection unit; 405: normalization unit; 406: capacitor voltage command generation unit; 411: all-capacitor voltage control unit; 413: DC control unit; 415: AC current control unit; 417: first circulating current command generation unit; 419, 419A: second circulating current command generation unit; 421: circulating current control unit; 423, 423A: zero-phase voltage command generation unit; 425: voltage command generation unit; 427: modulation command generation unit; 452, 452A: amplitude control unit; 454: phase adjustment unit; 456: generation unit; 477: filter unit; 478: polarity inversion unit; 480: amplitude adjustment unit; 482: integrator; 484: limiter; 502: basic control unit; 503: arm control unit; 611: reference phase generation unit; 613, 613A: phase control unit; 615: zero-phase voltage generation unit; 625: phase state detection unit; 635: proportioner; 639: holding unit.

**Claims**

1. A power conversion device connected to an AC system, the power conversion device comprising:

   a power converter including a plurality of arms for each phase of the AC system; and
   a control device to control the power converter, wherein
   each of the plurality of arms has a plurality of converter cells cascade-connected to each other,
   each of the plurality of converter cells has a plurality of switching elements and an energy storage element connected to the plurality of switching elements,
   the control device includes

a first circulating current command generation unit to generate a first circulating current command value for controlling balance of voltages of the energy storage elements between the arms,

a second circulating current command generation unit to generate a second circulating current command value having a frequency component that is an even multiple of a fundamental wave frequency of the AC system, and

a circulating current control unit to generate a circulating voltage command value such that a circulating current circulating in the power converter follows a circulating current command value that is based on the first circulating current command value and the second circulating current command value, and

the second circulating current command generation unit

calculates a first control margin that is based on one or more representative values of the voltages of the energy storage elements and one or more representative command values respectively corresponding to the one or more representative values, and

controls an amplitude of the second circulating current command value based on at least one first control margin.

2. The power conversion device according to claim 1, wherein

the second circulating current command generation unit calculates, for each of the plurality of arms, a deviation between an average value of the voltages of the energy storage elements included in the arm and a value obtained by dividing a voltage command value for the arm by a number of the converter cells included in the arm, the one or more representative values include a minimum value of the deviations, the one or more representative command values include a lower limit value related to the deviation, and the second circulating current command generation unit calculates, as the first control margin, a first value obtained by subtracting the lower limit value from the minimum value of the deviations.

3. The power conversion device according to claim 1, wherein

the one or more representative values include a maximum voltage value of the voltages of the energy storage elements included in the power converter, the one or more representative command values include an upper limit voltage value of the energy storage element, and the second circulating current command generation unit calculates, as the first control margin, a second value obtained by subtracting the maximum voltage value from the upper limit voltage value of the energy storage element.

4. The power conversion device according to claim 1, wherein

the one or more representative values include a minimum voltage value of the voltages of the energy storage elements included in the power converter, the one or more representative command values include a lower limit voltage value of the energy storage element, and the second circulating current command generation unit calculates, as the first control margin, a third value obtained by subtracting the lower limit voltage value of the energy storage element from the minimum voltage value.

5. The power conversion device according to claim 1, wherein

the second circulating current command generation unit calculates, for each of the plurality of arms, a deviation between an average value of the voltages of the energy storage elements included in the arm and a value obtained by dividing a voltage command value for the arm by a number of the converter cells included in the arm, the one or more representative values include a minimum value of the deviations, a maximum voltage value of the voltages of the energy storage elements included in the power converter, and a minimum voltage value of the voltages of the energy storage elements included in the power converter, the one or more representative command values include a lower limit value related to the deviation, an upper limit voltage value of the energy storage element, and a lower limit voltage value of the energy storage element, and the second circulating current command generation unit calculates, as the first control margin, a minimum value of a first value, a second value, and a third value, the first value being obtained by subtracting the lower limit value from the minimum value of the deviations, the second value being obtained by subtracting the maximum voltage value from the upper limit voltage value of the energy storage element, the third value being obtained by subtracting the lower limit voltage value of the energy storage element from the minimum voltage value.

6. The power conversion device according to any one of claims 1 to 5, wherein

the second circulating current command generation unit includes

a filter unit to receive the first control margin as an input value, process the input value, and output an output value, and
an amplitude adjustment unit to adjust the amplitude of the second circulating current command value based on the output value,

when a present input value is less than a previous output value, the filter unit outputs the present input value as a present output value, and
when the present input value is more than or equal to the previous output value, the filter unit outputs a value that is less than or equal to the present input value and is more than or equal to the previous output value, as a present output value.

7. The power conversion device according to any one of claims 1 to 5, wherein

the second circulating current command generation unit includes

a filter unit to receive the first control margin as an input value, process the input value, and output an output value, and
an amplitude adjustment unit to adjust the amplitude of the second circulating current command value based on the output value,

when the input value does not become less than the output value at an n-th (where n is an integer that is more than or equal to 1) update timing within a specified period from the n-th update timing, the filter unit sets a timing after a lapse of the specified period from the n-th update timing, as an (n+1)-th update timing, and outputs a minimum value of the input value within the specified period from the n-th update timing, as the output value at the (n+1)-th update timing, and
when the input value becomes less than the output value at the n-th update timing within the specified period from the n-th update timing, the filter unit sets a first timing at which the input value becomes less than the output value at the n-th update timing, as an (n+1)-th update timing, and after the first timing, the filter unit outputs a value identical to a present input value, as a present output value, until the present input value becomes more than or equal to a previous output value.

8. The power conversion device according to claim 6 or 7, wherein

the amplitude adjustment unit includes

an integrator to time-integrate a value obtained by inverting polarity of the output value, and
a limiter to output a value obtained by limiting an output value of the integrator using a specified limit value, as the amplitude of the second circulating current command value, and

a lower limit value of the specified limit value is zero.

9. The power conversion device according to any one of claims 1 to 8, wherein the second circulating current command generation unit adjusts a phase of the second circulating current command value such that a frequency component of the fundamental wave frequency of the voltages of the energy storage elements decreases.

10. The power conversion device according to any one of claims 1 to 9, wherein

the control device further includes a phase control unit to control a phase of a zero-phase voltage command value for the power converter,

the phase control unit

calculates, for each of the plurality of arms, a second control margin that is based on the voltages of the energy storage elements included in the arm and a voltage command value for the arm, and
calculates an adjustment phase for adjusting the phase of the zero-phase voltage command value based on each second control margin, and

when a magnitude of a temporal change of the adjustment phase is larger than a first threshold value, the second circulating current command generation unit stops control for the amplitude of the second circulating current command value.

11. The power conversion device according to any one of claims 1 to 9, wherein

the control device further includes a phase control unit to control a phase of a zero-phase voltage command value for the power converter,
the phase control unit

calculates, for each of the plurality of arms, a second control margin that is based on the voltages of the energy storage elements included in the arm and a voltage command value for the arm, and
calculates an adjustment phase for adjusting the phase of the zero-phase voltage command value based on each second control margin, and

when a magnitude of a temporal change of the amplitude of the second circulating current command value is larger than a second threshold value, the phase control unit calculates a previous adjustment phase as a present adjustment phase.

FIG.1

DC CIRCUIT

CONTROL DEVICE

AC SYSTEM

FIG.2

(a)

(b)

FIG.3

5

FIG.4

5

502

502u

U-PHASE BASIC CONTROL UNIT

503

503pu

POSITIVE-SIDE ARM CONTROL UNIT

503nu

NEGATIVE-SIDE ARM CONTROL UNIT

502v

V-PHASE BASIC CONTROL UNIT

503pv

POSITIVE-SIDE ARM CONTROL UNIT

503nv

NEGATIVE-SIDE ARM CONTROL UNIT

502w

W-PHASE BASIC CONTROL UNIT

503pw

POSITIVE-SIDE ARM CONTROL UNIT

503nw

NEGATIVE-SIDE ARM CONTROL UNIT

CONTROL DEVICE

FIG.5

502

401 ELECTRICAL QUANTITY CALCULATION UNIT
402 AVERAGE VALUE CALCULATION UNIT
403 MAXIMUM VALUE DETECTION UNIT
404 MINIMUM VALUE DETECTION UNIT
405 NORMALIZATION UNIT
406 CAPACITOR VOLTAGE COMMAND GENERATION UNIT

Inputs: Vacu, Vacv, Vacw; Vdcp, Vdcn; Ipu, Ipv, Ipw, Inu, Inv, Inw; Vcpu_1~Vcpu_M, Vcpv_1~Vcpv_M, Vcpw_1~Vcpw_M, Vcnu_1~Vcnu_M, Vcnv_1~Vcnv_M, Vcnw_1~Vcnw_M (6×M)

Signals: Vdc; Idc; Iacu, Iacv, Iacw; Izu, Izv, Izw; Vcpua, Vcpva, Vcpwa, Vcnua, Vcnva, Vcnwa (6); Vcmax; Vcmin

Outputs: Vac_pu; Vdc_pu; Idc_pu; Iac_pu; Iz_pu; Vca_pu (6); Vcmax_pu; Vcmin_pu; Vc* (6)

FIG.6

FIG.7

FIG.8

EP 4 726 996 A1

FIG.9

EP 4 726 996 A1

INPUT VALUE

OUTPUT VALUE

TIME

t0          t1 t2

FIG.10

EP 4 726 996 A1

FIG.11

FIG.12

FIG.13

EP 4 726 996 A1

FIG.14

700

| Ph | $\sigma U1min$ | $\sigma L1min$ | $\sigma U2min$ | $\sigma L2min$ |
|---|---|---|---|---|
| 0 | $\sigma pwU$ | $\sigma nwL$ | $\sigma nuU$ | $\sigma puL$ |
| 1 | $\sigma nvU$ | $\sigma pvL$ | $\sigma pwU$ | $\sigma nwL$ |
| 2 | $\sigma puU$ | $\sigma nuL$ | $\sigma nvU$ | $\sigma pvL$ |
| 3 | $\sigma nwU$ | $\sigma pwL$ | $\sigma puL$ | $\sigma nuL$ |
| 4 | $\sigma pvU$ | $\sigma nvL$ | $\sigma nwU$ | $\sigma pwL$ |
| 5 | $\sigma nuU$ | $\sigma puL$ | $\sigma pvU$ | $\sigma nvL$ |

FIG.15

FIG.16

## FIG.17

FIG.18

FIG.19

EP 4 726 996 A1

FIG.20

EP 4 726 996 A1

## INTERNATIONAL SEARCH REPORT

| International application No. |
|---|
| **PCT/JP2023/021008** |

### A. CLASSIFICATION OF SUBJECT MATTER

*H02M 7/49*(2007.01)i
FI:  H02M7/49

According to International Patent Classification (IPC) or to both national classification and IPC

### B. FIELDS SEARCHED

Minimum documentation searched (classification system followed by classification symbols)

H02M7/49

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/199149 A1 (MITSUBISHI ELECTRIC CORPORATION) 07 October 2021 (2021-10-07)<br>entire text, all drawings | 1-11 |
| A | WO 2022/208735 A1 (MITSUBISHI ELECTRIC CORPORATION) 06 October 2022 (2022-10-06)<br>entire text, all drawings | 1-11 |
| A | JP 2019-30106 A (KABUSHIKI KAISHA TOSHIBA) 21 February 2019 (2019-02-21)<br>entire text, all drawings | 1-11 |
| A | JP 2013-251933 A (HITACHI, LTD.) 12 December 2013 (2013-12-12)<br>entire text, all drawings | 1-11 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

### INTERNATIONAL SEARCH REPORT
Information on patent family members

International application No.

**PCT/JP2023/021008**

| Patent document cited in search report | | | Publication date (day/month/year) | Patent family member(s) | | | Publication date (day/month/year) |
|---|---|---|---|---|---|---|---|
| WO | 2021/199149 | A1 | 07 October 2021 | US | 2023/0041013 | A1 | |
| | | | | EP | 4131765 | A1 | |
| WO | 2022/208735 | A1 | 06 October 2022 | JP | 7038936 | B1 | |
| JP | 2019-30106 | A | 21 February 2019 | (Family: none) | | | |
| JP | 2013-251933 | A | 12 December 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7038936 B